# EUROPÄISCHE PATENTSCHRIFT

(11) **EP 2 139 936 B1**
(45) Veröffentlichungstag und Bekanntmachung des Hinweises auf die Patenterteilung: **13.11.2019**
(21) Anmeldenummer: 08718270.5
(22) Anmeldetag: 27.03.2008
(51) Int. Cl.: C08G 18/12, C08G 18/48, C08G 18/76

(54) **POLYURETHANZUSAMMENSETZUNG ENTHALTEND ASYMMETRISCHES DIALDIMIN**
POLYURETHANE COMPOUND CONTAINING ASYMMETRIC DIALDIMINE
COMPOSITION DE POLYURÉTHANE COMPRENANT DE LA DIALDIMINE ASYMÉTRIQUE

(30) Priorität: 27.03.2007 EP 07105006
(43) Veröffentlichungstag der Anmeldung: 06.01.2010
(73) Patentinhaber: Sika Technology AG, 6340 Baar (CH)
(72) Erfinder: BURCKHARDT, Urs, CH-8049 Zürich (CH)
(74) Vertreter: Sika Patent Attorneys
(86) Internationale Anmeldenummer: PCT/EP2008/053635
(87) Internationale Veröffentlichungsnummer: WO 2008/116902

(56) Entgegenhaltungen:
- EP-A- 1 770 107
- EP-A- 1 772 447
- EP-A- 1 775 284
- DE-A1- 3 133 769
- US-A- 5 726 272

## Beschreibung

### Technisches Gebiet

Die vorliegende Erfindung betrifft das Gebiet der feuchtigkeitshärtenden Polyurethanzusammensetzungen, sowie deren Verwendung, insbesondere als elastische Klebstoffe, Dichtstoffe und Beschichtungen.

### Stand der Technik

Feuchtigkeitshärtende Zusammensetzungen, welche auf Isocyanat-gruppen aufweisenden Polyurethanpolymeren basieren, werden seit geraumer Zeit als elastische Klebstoffe, Dichtstoffe und Beschichtungen eingesetzt. Die darin verwendeten Polyurethanpolymere sind üblicherweise aus Polyetherpolyolen und Polyisocyanaten aufgebaut. Diese Zusammensetzungen neigen bei ihrer Aushärtung mittels Feuchtigkeit zur Blasenbildung durch freigesetztes Kohlendioxid-Gas, das nicht schnell genug gelöst oder abgeleitet wird.

Um die Blasenbildung zu vermindern, können den Polyurethanzusammensetzungen blockierte Amine, sogenannte "latente Härter", wie beispielsweise Polyoxazolidine, Polyketimine oder Polyaldimine, zugegeben werden. Dadurch kann jedoch die Lagerstabilität der Zusammensetzungen herabgesetzt werden.

Aus US 4,469,831 und US 4,853,454 sind Polyurethanzusammensetzungen bekannt, welche Polyaldimine enthalten und welche über eine gute Lagerstabilität verfügen.

Aus WO 2004/013200 sind Polyurethanzusammensetzungen enthaltend spezielle Polyaldimine bekannt, welche ebenfalls eine gute Lagerstabilität aufweisen, und welche geruchsfrei aushärten.

Aus DE 3133769, US 5,726,272, EP 1770107, EP 1775284 und EP1772447 sind weitere feuchtigkeitshärtende Polyurethanzusammensetzungen bekannt, welche Polyaldimine enthalten.

Latente Härter enthaltende Polyurethanzusammensetzungen, insbesondere solche basierend auf aromatischen Polyisocyanaten, weisen jedoch meist den Nachteil auf, dass ihre Aushärtung sehr schnell einsetzt, so dass sich eine zu kurze Offenzeit und damit ein zur kurzes Verarbeitungsfenster ergibt. Zudem werden bei der Aushärtung meist flüchtige und geruchsintensive Abspaltungsprodukte, insbesondere Aldehyde oder Ketone, freigesetzt, was je nach Anwendung störend oder völlig unerwünscht ist.

### Darstellung der Erfindung

Aufgabe der vorliegenden Erfindung ist es daher, feuchtigkeitshärtende Polyurethanzusammensetzungen zur Verfügung zu stellen, welche lagerstabil sind, eine lange Offenzeit und eine hohe Aushärtungsgeschwindigkeit aufweisen und ohne Blasenbildung aushärten.

Überraschenderweise wurde nun gefunden, dass Zusammensetzungen nach Anspruch 1 diese Aufgabe lösen. Diese Zusammensetzungen enthalten spezielle asymmetrische Dialdimine, wodurch sie gleichzeitig lagerstabil sind, eine lange Offenzeit und eine hohe Aushärtungsgeschwindigkeit aufweisen und blasenfrei aushärten. In einer bevorzugten Ausführungsform sind diese Zusammensetzungen zudem geruchsfrei, und zwar sowohl vor als auch während und nach ihrer Aushärtung. Die Zusammensetzungen können einkomponentig oder zweikomponentig ausgestaltet sein und als Klebstoff, Dichtstoff, Vergussmasse oder Beschichtung verwendet werden. Als besonders vorteilhaft hat sich die Verwendung als Dichtstoff erwiesen.

Weiterhin Gegenstand der Erfindung sind ein Verfahren zum Verkleben gemäss Anspruch 15, ein Verfahren zum Abdichten gemäss Anspruch 16 und ein Verfahren zum Beschichten gemäss Anspruch 17.

Schliesslich sind die ausgehärtete Zusammensetzung gemäss Anspruch 12 sowie die nach den beschriebenen Verfahren verklebten, abgedichteten oder beschichteten Artikel gemäss Anspruch 18 Gegenstand der vorliegenden Erfindung.

Bevorzugte Ausführungen der Erfindung sind Gegenstand der abhängigen Ansprüche.

### Wege zur Ausführung der Erfindung

Gegenstand der vorliegenden Erfindung ist eine Zusammensetzung, umfassend
a) mindestens ein aromatische Isocyanatgruppen aufweisendes Polyisocyanat **P,** und
b) mindestens ein Dialdimin **A** der Formel (I). 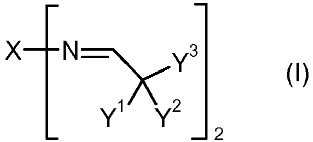
Hierbei steht X für den Rest eines Diamins **DA** mit zwei primären Aminogruppen nach der Entfernung dieser zwei Aminogruppen. Weiterhin stehen Y¹ und Y² entweder unabhängig voneinander jeweils für einen einwertigen Kohlenwasserstoffrest mit 1 bis 12 C-Atomen, oder Y¹ und Y² stehen zusammen für einen zweiwertigen Kohlenwasserstoffrest mit 4 bis 20 C-Atomen, der Teil eines, gegebenenfalls substituierten, carbocyclischen Rings mit 5 bis 8, bevorzugt 6, C-Atomen ist.

Weiterhin steht Y³ für einen einwertigen Kohlenwasserstoffrest, welcher gegebenenfalls mindestens ein Heteroatom, insbesondere Sauerstoff in Form von Ether-, Carbonyl- oder Ester-Gruppen, aufweist.

Für die Erfindung wesentlich ist die Massgabe, dass mindestens eine der beiden primären Aminogruppen des Diamins **DA** eine aliphatische Aminogruppe ist und dass sich die zwei primären Aminogruppen des Diamins **DA** entweder
in der Anzahl der Wasserstoffatome an den in α-Stellung zur jeweiligen Aminogruppe stehenden Kohlenstoffatomen (C_{α}) um mindestens eins
   oder
in der Anzahl der Wasserstoffatome an den in β-Stellung zur jeweiligen Aminogruppe stehenden Kohlenstoffatomen (C_{β}) um mindestens zwei
voneinander unterscheiden.

Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst im Weiteren auch sogenannte Prepolymere, das heisst reaktive oligomere Voraddukte, deren funktionelle Gruppen am Aufbau von Makromolekülen beteiligt sind.

Der Begriff "Polyurethanpolymer" umfasst sämtliche Polymere, welche nach dem sogenannten Diisocyanat-Polyadditions-Verfahren hergestellt werden. Dies schliesst auch solche Polymere ein, die nahezu oder gänzlich frei sind von Urethangruppen. Beispiele für Polyurethanpolymere sind Polyether-Polyurethane, Polyester-Polyurethane, Polyether-Polyharnstoffe, Polyharnstoffe, Polyester-Polyharnstoffe, Polyisocyanurate und Polycarbodiimide.

Mit "Poly" beginnende Substanznamen wie Polyaldimin, Polyisocyanat, Polyol oder Polyamin bezeichnen im vorliegenden Dokument Substanzen, die formal zwei oder mehr der in ihrem Namen vorkommenden funktionellen Gruppen pro Molekül enthalten.

Der Begriff "aromatische Isocyanatgruppe" bezeichnet im vorliegenden Dokument eine Isocyanatgruppe, welche an ein aromatisches C-Atom gebunden ist.

Der Begriff "primäre Aminogruppe" bezeichnet im vorliegenden Dokument eine NH₂-Gruppe, die an einen organischen Rest gebunden ist, während der Begriff "sekundäre Aminogruppe" eine NH-Gruppe bezeichnet, die an zwei organische Reste, welche auch gemeinsam Teil eines Rings sein können, gebunden ist.

Als "aliphatische Aminogruppe" wird eine Aminogruppe bezeichnet, die an einen aliphatischen, cycloaliphatischen oder arylaliphatischen Rest gebunden ist. Sie unterscheidet sich damit von einer "aromatischen Aminogruppe", welche direkt an einen aromatischen oder heteroaromatischen Rest gebunden ist, wie beispielsweise in Anilin oder 2-Aminopyridin.

Als "Offenzeit" wird in diesem Dokument die Zeit bezeichnet, während der die Zusammensetzung verarbeitet werden kann, nachdem die Isocyanatgruppen des Polyisocyanats mit Wasser in Kontakt gekommen sind.

Die Zusammensetzung umfasst mindestens ein aromatische Isocyanatgruppen aufweisendes Polyisocyanat **P.**

In einer ersten Ausführungsform ist das aromatische Isocyanatgruppen aufweisende Polyisocyanat **P** ein aromatische Isocyanatgruppen aufweisendes Polyurethanpolymer **PUP.**

Ein geeignetes Polyurethanpolymer **PUP** ist insbesondere erhältlich aus der Umsetzung von mindestens einem Polyol mit mindestens einem aromatischen Polyisocyanat. Diese Umsetzung kann dadurch erfolgen, dass das Polyol und das Polyisocyanat mit üblichen Verfahren, beispielsweise bei Temperaturen von 50 °C bis 100 °C, gegebenenfalls unter Mitverwendung geeigneter Katalysatoren, zur Reaktion gebracht werden, wobei das Polyisocyanat so dosiert ist, dass dessen Isocyanatgruppen im Verhältnis zu den Hydroxylgruppen des Polyols im stöchiometrischen Überschuss vorhanden sind. Vorteilhaft ist das Polyisocyanat so dosiert, dass ein NCO/OH-Verhältnis von 1.3 bis 5, insbesondere eines von 1.5 bis 3, eingehalten wird. Unter dem NCO/OH-Verhältnis wird hierbei das Verhältnis der Anzahl der eingesetzten Isocyanatgruppen zu der Anzahl der eingesetzten Hydroxylgruppen verstanden. Bevorzugt verbleibt im Polyurethanpolymer **PUP** nach der Umsetzung aller Hydroxylgruppen des Polyols ein Gehalt an freien Isocyanatgruppen von 0.5 bis 15 Gewichts-%, besonders bevorzugt von 0.5 bis 10 Gewichts-%.

Gegebenenfalls kann das Polyurethanpolymer **PUP** unter Mitverwendung von Weichmachern hergestellt werden, wobei die verwendeten Weichmacher keine gegenüber Isocyanaten reaktive Gruppen enthalten.

Als Polyole für die Herstellung eines Polyurethanpolymers **PUP** können beispielsweise die folgenden handelsüblichen Polyole oder Mischungen davon eingesetzt werden:
- Polyoxyalkylenpolyole, auch Polyetherpolyole oder Oligoetherole genannt, welche Polymerisationsprodukte von Ethylenoxid, 1,2-Propylenoxid, 1,2- oder 2,3-Butylenoxid, Oxetan, Tetrahydrofuran oder Mischungen davon sind, eventuell polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin, sowie Mischungen der vorgenannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliequivalent Ungesättigtheit pro Gramm Polyol (mEq/g)), hergestellt beispielsweise mit Hilfe von sogenannten Double Metal Cyanide Complex-Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH, CsOH oder Alkalialkoholaten.

Besonders geeignet sind Polyoxyalkylendiole oder Polyoxyalkylentriole, insbesondere Polyoxypropylendiole oder Polyoxypropylentriole.

Speziell geeignet sind Polyoxyalkylendiole und -triole mit einem Ungesättigtheitsgrad tiefer als 0.02 mEq/g und mit einem Molekulargewicht im Bereich von 1'000 - 30'000 g/mol, sowie Polyoxypropylendiole und -triole mit einem Molekulargewicht von 400 - 8'000 g/mol.

Ebenfalls besonders geeignet sind sogenannte Ethylenoxid-terminierte ("EO-endcapped", ethylene oxide-endcapped) Polyoxypropylenpolyole. Letztere sind spezielle Polyoxypropylenpolyoxyethylenpolyole, die beispielsweise dadurch erhalten werden, dass reine Polyoxypropylenpolyole, insbesondere Polyoxypropylendiole und -triole, nach Abschluss der Polypropoxylierungsreaktion mit Ethylenoxid weiter alkoxyliert werden und dadurch primäre Hydroxylgruppen aufweisen.
- Styrol-Acrylnitril- oder Acrylnitril-Methylmethacrylat-gepfropfte Polyetherpolyole.
- Polyesterpolyole, auch Oligoesterole genannt, hergestellt beispielsweise aus zwei- bis dreiwertigen Alkoholen wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole mit organischen Dicarbonsäuren oder deren Anhydride oder Ester wie beispielsweise Bernsteinsäure, Glutarsäure, Adipinsäure, Korksäure, Sebacinsäure, Dodecandicarbonsäure, Maleinsäure, Fumarsäure, Phthalsäure, Isophthalsäure, Terephthalsäure und Hexahydrophthalsäure oder Mischungen der vorgenannten Säuren, sowie Polyesterpolyole aus Lactonen wie beispielsweise ε-Caprolacton.
- Polycarbonatpolyole, wie sie durch Umsetzung beispielsweise der oben genannten - zum Aufbau der Polyesterpolyole eingesetzten - Alkohole mit Dialkylcarbonaten, Diarylcarbonaten oder Phosgen zugänglich sind.
- Polyacrylat- und Polymethacrylatpolyole.
- Polyhydroxyfunktionelle Fette und Öle, beispielsweise natürliche Fette und Öle, insbesondere Ricinusöl; oder durch chemische Modifizierung von natürlichen Fetten und Ölen gewonnene - sogenannte oleochemische - Polyole, beispielsweise die durch Epoxidierung ungesättigter Öle und anschliessender Ringöffnung mit Carbonsäuren bzw. Alkoholen erhaltenen Epoxypolyester bzw. Epoxypolyether, oder durch Hydroformylierung und Hydrierung ungesättigter Öle erhaltene Polyole; oder aus natürlichen Fetten und Ölen durch Abbauprozesse wie Alkoholyse oder Ozonolyse und anschliessender chemischer Verknüpfung, beispielsweise durch Umesterung oder Dimerisierung, der so gewonnenen Abbauprodukte oder Derivaten davon erhaltene Polyole. Geeignete Abbauprodukte von natürlichen Fetten und Ölen sind insbesondere Fettsäuren und Fettalkohole sowie Fettsäureester, insbesondere die Methylester (FAME), welche beispielsweise durch Hydroformylierung und Hydrierung zu Hydroxyfettsäureestern derivatisiert werden können.
- Polykohlenwasserstoffpolyole, auch Oligohydrocarbonole genannt, wie beispielsweise polyhydroxyfunktionelle Ethylen-Propylen-, Ethylen-Butylen- oder Ethylen-Propylen-Dien-Copolymere, wie sie beispielsweise von der Firma Kraton Polymers hergestellt werden, oder polyhydroxyfunktionelle Copolymere aus Dienen wie 1,3-Butandien oder Diengemischen und Vinylmonomeren wie Styrol, Acrylnitril oder Isobutylen, oder polyhydroxyfunktionelle Polybutadienpolyole, wie beispielsweise solche, die durch Copolymerisation von 1,3-Butadien und Allylalkohol hergestellt werden und auch hydriert sein können.
- Polyhydroxyfunktionelle Acrylonitril/Butadien-Copolymere, wie sie beispielsweise aus Epoxiden oder Aminoalkoholen und carboxylterminierten Acrylonitril/Butadien-Copolymeren (kommerziell erhältlich unter dem Namen Hycar® CTBN von Hanse Chemie) hergestellt werden können.

Diese genannten Polyole weisen bevorzugt ein mittleres Molekulargewicht von 250 - 30'000 g/mol, insbesondere von 400 - 20'000 g/mol, und weisen bevorzugt eine mittlere OH-Funktionalität im Bereich von 1.6 bis 3 auf.

Zusätzlich zu diesen genannten Polyolen können kleine Mengen von niedrigmolekularen zwei- oder mehrwertigen Alkoholen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, hydriertes Bisphenol A, dimere Fettalkohole, 1,1,1-Trimethylolethan, 1,1,1-Trimethylolpropan, Glycerin, Pentaerythrit, Zuckeralkohole wie Xylit, Sorbit oder Mannit, Zucker wie Saccharose, andere höherwertige Alkohole, niedrigmolekulare Alkoxylierungsprodukte der vorgenannten zwei- und mehrwertigen Alkohole, sowie Mischungen der vorgenannten Alkohole bei der Herstellung des Polyurethanpolymers **PUP** mitverwendet werden. Ebenso können kleine Mengen an Polyolen mit einer mittleren OH-Funktionalität von mehr als 3 mitverwendet werden, beispielsweise Zuckerpolyole.

Als Polyisocyanate für die Herstellung eines aromatische Isocyanat-gruppen aufweisenden Polyurethanpolymers **PUP** werden aromatische Polyisocyanate, insbesondere die Diisocyanate, eingesetzt. Als aromatische Polyisocyanate eignen sich beispielsweise 2,4- und 2,6-Toluylendiisocyanat und beliebige Gemische dieser Isomeren (TDI), 4,4'-, 2,4'- und 2,2'-Diphenylmethandiisocyanat und beliebige Gemische dieser Isomeren (MDI), Gemische aus MDI und MDI-Homologen (polymeres MDI oder PMDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI), Dianisidindiisocyanat (DADI), Oligomere und Polymere der vorgenannten Isocyanate, sowie beliebige Mischungen der vorgenannten Isocyanate. Bevorzugt sind MDI und TDI.

Die genannten aromatischen Polyisocyanate sind kommerziell erhältlich.

In einer zweiten Ausführungsform ist das aromatische Isocyanat-gruppen aufweisende Polyisocyanat **P** ein aromatisches Polyisocyanat **PI.** Das aromatische Polyisocyanat **PI** stellt insbesondere ein aromatisches Diisocyanat, oder ein niedrigmolekulares Oligomeres eines aromatischen Diisocyanates, oder ein Derivat eines aromatischen Diisocyanates, oder eine beliebige Mischungen dieser Isocyanate, dar. Als aromatisches Polyisocyanat **PI** eignen sich beispielsweise 2,4- und 2,6- Toluylendiisocyanat und beliebige Gemische dieser Isomeren (TDI), 4,4'-, 2,4'- und 2,2'-Diphenylmethandiisocyanat und beliebige Gemische dieser Isomeren (MDI), Gemische aus MDI und MDI-Homologen (polymeres MDI oder PMDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI), Dianisidindiisocyanat (DADI), Oligomere und Polymere der vorgenannten Isocyanate, sowie beliebige Mischungen der vorgenannten Isocyanate.

Als Polyisocyanat **PI** bevorzugt sind bei Raumtemperatur flüssige Formen von MDI (sogenanntes "modifiziertes MDI"), welche Gemische von MDI mit MDI-Derivaten, wie beispielsweise MDI-Carbodiimiden, MDI-Uretoniminen oder MDI-Urethanen, darstellen, bekannt beispielsweise unter Handelsnamen wie Desmodur® CD, Desmodur® PF, Desmodur® PC (alle von Bayer), Lupranat® MM 103 (von BASF), Isonate® M 143 (von Dow), Suprasec® 2020, Suprasec® 2388 (beide von Huntsman); technische Formen von PMDI, beispielsweise erhältlich unter Handelsnamen wie Desmodur® VL, VL 50, VL R 10, VL R 20 und Desmodur® VKS 20 F (alle von Bayer), Lupranat® M 10 R, Lupranat® M 20 R (beide von BASF), Isonate® M 309, Voranate® M 229, Voranate M® 580 (alle von Dow), Suprasec® 5025, Suprasec® 2050, Suprasec® 2487 (alle von Huntsman); sowie technische Formen von oligomerem TDI, beispielsweise Desmodur® IL (Bayer). Die vorgenannten Polyisocyanate stellen üblicherweise Gemische von Substanzen mit unterschiedlichen Oligomerisationsgraden und/oder chemischen Strukturen dar. Vorzugsweise weisen sie eine mittlere NCO-Funktionalität von 2.1 bis 4.0 auf und enthalten insbesondere Isocyanurat-, Iminooxadiazindion-, Uretdion-, Urethan-, Biuret-, Allophanat-, Carbodiimid-, Uretonimin- oder Oxadiazintrion-Gruppen.

In einer dritten Ausführungsform ist das Polyisocyanat **P** eine Mischung bestehend aus mindestens einem Polyurethanpolymer **PUP** und mindestens einem Polyisocyanat **PI,** wie sie vorgängig beschrieben wurden.

Üblicherweise ist das Polyisocyanat **P** in einer Menge von 5 bis 95 Gewichts-%, bevorzugt in einer Menge von 10 bis 90 Gewichts-%, bezogen auf die gesamte Zusammensetzung, vorhanden. In gefüllten Zusammensetzungen, d.h. Zusammensetzungen, welche einen Füllstoff enthalten, ist das Polyisocyanat **P** bevorzugt in einer Menge von 5 bis 60 Gewichts-%, insbesondere 10 bis 50 Gewichts-%, bezogen auf die gesamte Zusammensetzung, vorhanden.

Die Zusammensetzung enthält neben mindestens einem aromatische Isocyanatgruppen aufweisenden Polyisocyanat **P** mindestens ein Dialdimin **A** der Formel (I). 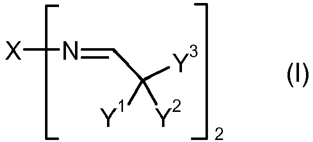 Bevorzugt stehen Y¹ und Y² jeweils für eine Methylgruppe.

Bevorzugt steht Y³ für einen Rest der Formel (II) oder (III), 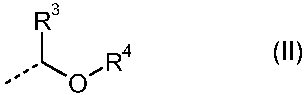 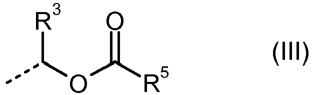
wobei R³ für ein Wasserstoffatom oder für eine Alkyl- oder Arylalkylgruppe, insbesondere mit 1 bis 12 C-Atomen, bevorzugt für ein Wasserstoffatom, steht;
R⁴ für einen Kohlenwasserstoffrest mit 1 bis 30, insbesondere 11 bis 30, C-Atomen, der gegebenenfalls Heteroatome enthält, steht; und
R⁵ entweder
   für ein Wasserstoffatom steht,
   oder für einen linearen oder verzweigten Alkylrest mit 1 bis 30, insbesondere 11 bis 30, C-Atomen, gegebenenfalls mit cyclischen Anteilen und gegebenenfalls mit mindestens einem Heteroatom, steht,
   oder für einen einfach oder mehrfach ungesättigten, linearen oder verzweigten Kohlenwasserstoffrest mit 5 bis 30 C-Atomen steht,
   oder für einen, gegebenenfalls substituierten, aromatischen oder heteroaromatischen 5- oder 6-gliedrigen Ring steht.

Besonders bevorzugt steht Y³ für einen Rest der Formel (III).

Die gestrichelten Linien in den Formeln in diesem Dokument stellen jeweils die Bindung zwischen einem Substituenten und dem zugehörigen Molekülrest dar.

Ein Dialdimin **A** der Formel (I) ist erhältlich durch eine Kondensationsreaktion unter Abspaltung von Wasser zwischen mindestens einem Diamin **DA** der Formel (IV) und mindestens einem Aldehyd **ALD** der Formel (V). Der Aldehyd **ALD** der Formel (V) wird hierbei in Bezug auf die Aminogruppen des Diamins stöchiometrisch oder in stöchiometrischem Überschuss eingesetzt.

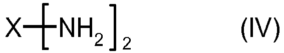

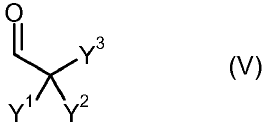

In den Formeln (IV) und (V) weisen X, Y¹, Y² und Y³ die bereits erwähnten Bedeutungen auf.

Es ist für die vorliegende Erfindung wesentlich, dass sich die zwei primären Aminogruppen des Diamins **DA** entweder in der Anzahl der Wasserstoffatome an den in α-Stellung (= 1-Stellung) zu den jeweiligen Aminogruppen stehenden Kohlenstoffatomen (C_{α}) um mindestens eins oder in der Anzahl der Wasserstoffatome an den in β-Stellung (= 2-Stellung) zu den jeweiligen Aminogruppen stehenden Kohlenstoffatomen (C_{β}) um mindestens zwei voneinander unterscheiden.

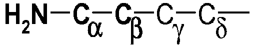

Das Diamin **DA** weist somit an den α- bzw. an den β-Kohlenstoffatomen zur jeweiligen Aminogruppe unterschiedliche Substitutionsmuster auf. Derartig unterschiedliche Substitution aufweisende Diamine werden im vorliegenden Dokument auch als "asymmetrisch" bezeichnet. Diese unterschiedliche Substitution führt zu einer unterschiedlichen Reaktivität der zwei primären Aminogruppen, insbesondere gegenüber Isocyanatgruppen.

Das Diamin **DA** unterscheidet sich somit in einer Ausführungsform im Substitutionsmuster an den Kohlenstoffatomen, welche in α-Stellung zu den primären Aminogruppen stehen.

Derartige Diamine **DA** sind beispielsweise 1,2-Propandiamin, 2-Methyl-1,2-propandiamin, 1,3-Butandiamin, 1,3-Diaminopentan (DAMP), 4-Aminoethylanilin, 4-Aminomethylanilin, 4-[(4-Aminocyclohexyl)methyl]anilin, 2-Aminoethylanilin, 2-Aminomethylanilin, 2-[(4-Aminocyclohexyl)methyl]anilin und 4-[(2-Aminocyclohexyl)methyl]anilin.

Das Diamin **DA** unterscheidet sich somit in einer anderen Ausführungsform im Substitutionsmuster an den Kohlenstoffatomen, welche in β-Stellung zu den primären Aminogruppen stehen.

Derartige Diamine **DA** sind beispielsweise 2,2,4-Trimethylhexamethylendiamin (TMD), 1,5-Diamino-2-butyl-2-ethyl-pentan, 1-Amino-3-aminomethyl-3,5,5-trimethylcyclohexan (= Isophorondiamin = IPDA) und 1,4-Diamino-2,2,6-trimethylcyclohexan (TMCDA).

Das Diamin **DA** weist zwei primäre Aminogruppen auf, wovon mindestens eine aliphatisch ist. Die zweite Aminogruppe kann eine aliphatische oder eine aromatische Aminogruppe sein.

Nicht als Diamin **DA** der Formel (IV) gelten Diamine, deren Aminogruppen sich lediglich um ein Wasserstoffatom an den in β-Stellung zu den jeweiligen Aminogruppen stehenden Kohlenstoffatomen (C_{β}) voneinander unterscheiden. Ein Beispiel für ein derartiges Diamin, welches kein Diamin **DA** darstellt, ist 2-Methylpentamethylendiamin (= 1,5-Diamino-2-methylpentan = MPMD). Ebenfalls nicht als Diamin **DA** der Formel (IV) gelten Diamine, deren Aminogruppen sich lediglich in der Anzahl der Wasserstoffatome an den in γ- oder δ-Stellung zu den jeweiligen Aminogruppen stehenden Kohlenstoffatomen (C_{γ} bzw. C_{δ}) voneinander unterscheiden. In all diesen Fällen bewirkt das unterschiedliche Substitutionsmuster am Diamin keine unterschiedliche, oder eine nur unwesentlich unterschiedliche, Reaktivität der Aminogruppen, insbesondere gegenüber Isocyanatgruppen.

Bevorzugt ist das Diamin **DA** der Formel (IV) ausgewählt aus der Gruppe bestehend aus 1,3-Diaminopentan (DAMP), 1,5-Diamino-2-butyl-2-ethyl-pentan, 2,2,4-Trimethylhexamethylendiamin (TMD) und 1-Amino-3-aminomethyl-3,5,5-trimethylcyclohexan (= Isophorondiamin = IPDA).

Der zur Herstellung eines Dialdimins **A** der Formel (I) einsetzbare Aldehyd **ALD** weist die Formel (V) auf und stellt einen tertiären aliphatischen oder tertiären cycloaliphatischen Aldehyd dar. Als Aldehyd **ALD** eignen sich beispielsweise Pivalaldehyd (= 2,2-Dimethyl-propanal), 2,2-Dimethyl-butanal, 2,2-Diethyl-butanal, 1-Methyl-cyclopentancarboxaldehyd, 1-Methyl-cyclohexancarboxaldehyd; Ether aus 2-Hydroxy-2-methylpropanal und Alkoholen wie Propanol, Isopropanol, Butanol und 2-Ethylhexanol; Ester aus 2-Formyl-2-methylpropionsäure oder 3-Formyl-3-methylbuttersäure und Alkoholen wie Propanol, Isopropanol, Butanol und 2-Ethylhexanol; Ester aus 2-Hydroxy-2-methylpropanal und Carbonsäuren wie Buttersäure, Isobuttersäure und 2-Ethylhexansäure; sowie die im folgenden als besonders geeignet beschriebenen Ether und Ester von 2,2-disubstituierten 3-Hydroxypropanalen, -butanalen oder analogen höheren Aldehyden, insbesondere von 2,2-Dimethyl-3-hydroxypropanal.

Besonders geeignete Aldehyde **ALD** der Formel (V) sind in einer Ausführungsform Aldehyde **ALD1** der Formel (VI), also Aldehyde **ALD** der Formel (V) mit dem Rest Y³ der Formel (II).

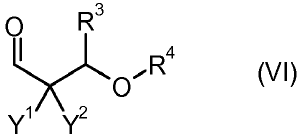

In Formel (VI) stehen Y¹ und Y² jeweils bevorzugt für eine Methylgruppe und R³ steht bevorzugt für ein Wasserstoffatom.

Die Aldehyde **ALD1** der Formel (VI) stellen Ether von aliphatischen, arylaliphatischen oder cycloaliphatischen 2,2-disubstituierten 3-Hydroxyaldehyden mit Alkoholen oder Phenolen der Formel R⁴-OH, beispielsweise Fettalkoholen oder Phenol, dar. Geeignete 2,2-disubstituierte 3-Hydroxyaldehyde sind ihrerseits erhältlich aus Aldol-Reaktionen, insbesondere gekreuzten Aldol-Reaktionen, zwischen primären oder sekundären aliphatischen Aldehyden, insbesondere Formaldehyd, und sekundären aliphatischen, sekundären arylaliphatischen oder sekundären cycloaliphatischen Aldehyden, wie beispielsweise Isobutyraldehyd, 2-Methylbutyraldehyd, 2-Ethylbutyraldehyd, 2-Methylvaleraldehyd, 2-Ethylcapronaldehyd, Cyclopentancarboxaldehyd, Cyclohexancarboxaldehyd, 1,2,3,6-Tetrahydrobenzaldehyd, 2-Methyl-3-phenylpropionaldehyd, 2-Phenylpropionaldehyd (Hydratropaldehyd) oder Diphenylacetaldehyd. Beispiele geeigneter 2,2-disubstituierter 3-Hydroxyaldehyde sind 2,2-Dimethyl-3-hydroxypropanal, 2-Hydroxymethyl-2-methyl-butanal, 2-Hydroxymethyl-2-ethyl-butanal, 2-Hydroxymethyl-2-methyl-pentanal, 2-Hydroxymethyl-2-ethyl-hexanal, 1-Hydroxymethyl-cyclopentancarboxaldehyd, 1-Hydroxymethyl-cyclohexancarboxaldehyd 1-Hydroxymethyl-cyclohex-3-encarboxaldehyd, 2-Hydroxymethyl-2-methyl-3-phenyl-propanal, 3-Hydroxy-2-methyl-2-phenyl-propanal und 3-Hydroxy-2,2-diphenyl-propanal.

Als Beispiele solcher Aldehyde **ALD1** der Formel (VI) genannt werden sollen 2,2-Dimethyl-3-(2-ethylhexyloxy)-propanal, 2,2-Dimethyl-3-lauroxy-propanal, 2,2-Dimethyl-3-stearoxy-propanal, 3-Cyclohexyloxy-2,2-dimethyl-propanal und 2,2-Dimethyl-3-phenoxy-propanal.

Besonders geeignete Aldehyde **ALD** der Formel (V) sind in einer weiteren Ausführungsform Aldehyde **ALD2** der Formel (VII), also Aldehyde **ALD** der Formel (V) mit dem Rest Y³ der Formel (III).

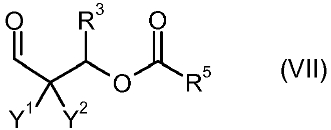

In Formel (VII) stehen Y¹ und Y² jeweils bevorzugt für eine Methylgruppe und R³ steht bevorzugt für ein Wasserstoffatom.

Die Aldehyde **ALD2** der Formel (VII) stellen Ester der bereits beschriebenen 2,2-disubstituierten 3-Hydroxyaldehyde mit geeigneten Carbonsäuren dar.

Beispiele für geeignete Carbonsäuren sind gesättigte aliphatische Carbonsäuren, wie Ameisensäure, Essigsäure, Propionsäure, Buttersäure, Isobuttersäure, Valeriansäure, Capronsäure, 2-Ethyl-capronsäure, Oenanthsäure, Caprylsäure, Pelargonsäure, Caprinsäure, Undecansäure, Laurinsäure, Tridecansäure, Myristinsäure, Pentadecansäure, Palmitinsäure, Margarinsäure, Stearinsäure, Nonadecansäure, Arachinsäure; einfach ungesättigte aliphatische Carbonsäuren wie Palmitoleinsäure, Ölsäure, Erucasäure; mehrfach ungesättigte aliphatische Carbonsäuren wie Linolsäure, Linolensäure, Elaeostearinsäure, Arachidonsäure; cycloaliphatische Carbonsäuren wie Cyclohexancarbonsäure; aryaliphatische Carbonsäuren wie Phenylessigsäure; aromatische Carbonsäuren wie Benzoesäure, Naphthoesäure, Toluylsäure, Anissäure; Isomere dieser Säuren; Fettsäuregemische aus der technischen Verseifung von natürlichen Ölen und Fetten wie beispielsweise Rapsöl, Sonnenblumenöl, Leinöl, Ölbaumöl, Kokosnussöl, Ölpalmkernöl und Ölpalmöl; sowie Dicarbonsäuremonoalkyl- und -arylester, wie sie aus der einfachen Veresterung von Dicarbonsäuren wie Bernsteinsäure, Glutarsäure, Adipinsäure, Pimelinsäure, Korksäure, Azelainsäure, Sebacinsäure, 1,12-Dodecandisäure, Maleinsäure, Fumarsäure, Hexahydrophthalsäure, Hexahydroisophthalsäure, Hexahydroterephthalsäure, 3,6,9-Trioxaundecandisäure und ähnliche Derivate von Polyethylenglykol, mit Alkoholen wie Methanol, Ethanol, Propanol, Butanol, höheren Homologen und Isomeren dieser Alkohole erhalten werden.

Bevorzugte Aldehyde **ALD2** der Formel (VII) sind 3-Benzoyloxy-2,2-dimethylpropanal, 3-Cyclohexanoyloxy-2,2-dimethylpropanal, 2,2-Dimethyl-3-(2-ethylhexyloxy)-propanal, 2,2-Dimethyl-3-lauroyloxy-propanal, 2,2-Dimethyl-3-myristoyloxypropanal, 2,2-Dimethyl-3-palmitoyloxy-propanal, 2,2-Dimethyl-3-stearoyloxypropanal und, sowie analoge Ester anderer 2,2-disubstituierter 3-Hydroxyaldehyde.

In einer besonders bevorzugten Ausführungsform ist R⁵ ausgewählt aus der Gruppe bestehend aus Phenyl, Cyclohexyl, 2-Ethylhexyl und den C₁₁-, C₁₃-, C₁₅- und C₁₇-Alkylgruppen.

Als Aldehyd der Formel (VII) meist bevorzugt ist 2,2-Dimethyl-3-lauroyloxypropanal.

In einer bevorzugten Herstellmethode des Aldehyds **ALD2** der Formel (VII) wird ein 2,2-disubstituierter 3-Hydroxyaldehyd, beispielsweise 2,2-Dimethyl-3-hydroxypropanal, welcher beispielsweise aus Formaldehyd (oder Paraformaldehyd) und Isobutyraldehyd, gegebenenfalls in situ, hergestellt werden kann, mit einer Carbonsäure zum entsprechenden Ester umgesetzt. Diese Veresterung kann ohne die Verwendung von Lösemitteln nach bekannten Methoden erfolgen, beschrieben beispielsweise in Houben-Weyl, "Methoden der organischen Chemie", Vol. VIII, Seiten 516 - 528.

Die Aldehyde **ALD2** der Formel (VII) sind gegenüber den Aldehyden **ALD1** der Formel (VI) aufgrund ihrer einfachen Herstellbarkeit bevorzugt.

In einer besonders bevorzugten Ausführungsform ist der Aldehyd **ALD** der Formel (V) geruchsfrei. Unter einer "geruchsfreien" Substanz wird eine Substanz verstanden, die so geruchsarm ist, dass sie für die meisten menschlichen Individuen nicht riechbar, das heisst mit der Nase nicht wahrnehmbar, ist.

Geruchsfreie Aldehyde **ALD** der Formel (V) sind einerseits insbesondere Aldehyde **ALD1** der Formel (VI), in welchen der Rest R⁴ für einen Kohlenwasserstoffrest mit 11 bis 30 C-Atomen, der gegebenenfalls Heteroatome enthält, steht.

Andererseits sind geruchsfreie Aldehyde **ALD** der Formel (V) insbesondere Aldehyde **ALD2** der Formel (VII), in welchen der Rest R⁵ entweder für eine lineare oder verzweigte Alkylgruppe mit 11 bis 30 C-Atomen, gegebenenfalls mit cyclischen Anteilen, und gegebenenfalls mit mindestens einem Heteroatom, insbesondere mit mindestens einem Ether-Sauerstoff, oder für eine einfach oder mehrfach ungesättigte lineare oder verzweigte Kohlenwasserstoffkette mit 11 bis 30 C-Atomen steht.

Beispiele für geruchsfreie Aldehyde **ALD2** der Formel (VII) sind Veresterungsprodukte aus den bereits genannten 2,2-disubstituierten 3-Hydroxyaldehyden mit Carbonsäuren wie beispielsweise Laurinsäure, Tridecansäure, Myristinsäure, Pentadecansäure, Palmitinsäure, Margarinsäure, Stearinsäure, Nonadecansäure, Arachinsäure, Palmitoleinsäure, Ölsäure, Erucasäure, Linolsäure, Linolensäure, Elaeostearinsäure, Arachidonsäure, sowie Fettsäuregemische aus der technischen Verseifung von natürlichen Ölen und Fetten, wie beispielsweise Rapsöl, Sonnenblumenöl, Leinöl, Ölbaumöl, Kokosnussöl, Ölpalmkernöl und Ölpalmöl.

Bevorzugte geruchsfreie Aldehyde der Formel (VII) sind 2,2-Dimethyl-3-lauroyloxypropanal, 2,2-Dimethyl-3-myristoyloxypropanal, 2,2-Dimethyl-3-palmitoyloxypropanal und 2,2-Dimethyl-3-stearoyloxypropanal. Besonders bevorzugt ist 2,2-Dimethyl-3-lauroyloxypropanal.

Die Dialdimine **A** der Formel (I) haben die Eigenschaft, dass sie in Abwesenheit von Wasser nicht mit Isocyanaten reagieren. Dies bedeutet insbesondere, dass ihre Reste X, Y¹, Y² und Y³ keine Gruppierungen aufweisen, welche mit Isocyanatgruppen reaktionsfähig sind. Insbesondere weisen X, Y¹, Y² und Y³ keine Hydroxylgruppen, keine primären oder sekundären Aminogruppen, keine Mercaptogruppen und keine anderen Gruppen mit aktivem Wasserstoff auf.

Die Dialdimine **A** der Formel (I) haben weiterhin die Eigenschaft, dass ihre Aldiminogruppen nicht zu Enaminogruppen tautomerisieren können, da sie als Substituenten in α-Stellung zum C-Atom der Aldiminogruppe keinen Wasserstoff enthalten. Aufgrund dieser Eigenschaft bilden sie zusammen mit aromatischen Isocyanatgruppen aufweisenden Polyisocyanaten **P** besonders lagerfähige, das heisst weitgehend viskositätsstabile, Mischungen.

Dialdimine **A,** welche ausgehend von geruchsfreien Aldehyden der vorgängig beschriebenen besonders bevorzugten Ausführungsform hergestellt wurden, sind geruchsfrei. Solche geruchsfreien Dialdimine **A** sind besonders bevorzugt. Für viele Anwendungen ist die Geruchsfreiheit ein grosser Vorteil oder eine unabdingbare Voraussetzung, insbesondere in geschlossenen Räumen wie im Innern von Gebäuden oder Fahrzeugen und bei grossflächigen Applikationen wie beispielsweise beim Aufbringen von Bodenbelägen.

Die Dialdimine **A** sind unter geeigneten Bedingungen, insbesondere unter Ausschluss von Feuchtigkeit, lagerstabil. Bei Zutritt von Feuchtigkeit können ihre Aldiminogruppen über Zwischenstufen formal zu Aminogruppen hydrolysieren, wobei der entsprechende, zur Herstellung des Dialdimins **A** verwendete, Aldehyd **ALD** der Formel (V) freigesetzt wird. Da diese Hydrolysereaktion reversibel ist und das chemische Gleichgewicht deutlich auf der Aldiminseite liegt, ist davon auszugehen, dass in Abwesenheit von gegenüber Aminen reaktiven Gruppen nur ein Teil der Aldiminogruppen hydrolysieren.

In Gegenwart von Isocyanatgruppen verschiebt sich das Hydrolysegleichgewicht, da die hydrolysierenden Aldiminogruppen mit den Isocyanatgruppen irreversibel zu Harnstoffgruppen reagieren. Die Reaktion der Isocyanatgruppen mit den hydrolysierenden Aldiminogruppen muss dabei nicht notwendigerweise über freie Aminogruppen erfolgen. Selbstverständlich sind auch Reaktionen mit Zwischenstufen der Hydrolysereaktion möglich. Beispielsweise ist es denkbar, dass eine hydrolysierende Aldiminogruppe in der Form eines Halbaminals direkt mit einer Isocyanatgruppe reagiert.

Das Dialdimin **A** ist in der Zusammensetzung bevorzugt in einer leicht überstöchimetrischen, stöchiometrischen oder unterstöchiometrischen Menge, bezogen auf die Isocyanatgruppen, vorhanden. Vorteilhaft ist das Dialdimin **A** der Formel (I) in einer derartigen Menge in der Zusammensetzung vorhanden, dass das Verhältnis zwischen der Anzahl der Aldiminogruppen und der Anzahl der Isocyanatgruppen 0.1 bis 1.1, insbesondere 0.15 bis 1.0, besonders bevorzugt 0.2 bis 0.9, beträgt.

Als Dialdimin **A** können auch Mischungen verschiedener Dialdimine **A** verwendet werden. Insbesondere können Mischungen verschiedener Dialdimine **A** eingesetzt werden, welche ausgehend von Mischungen verschiedener Diamine **DA** der Formel (IV) und/oder Mischungen verschiedener Aldehyde **ALD** der Formel (V) hergestellt wurden.

Es ist auch möglich, dass neben mindestens einem Dialdimin **A** weitere Polyaldimine in der Zusammensetzung vorhanden sind. So ist es beispielsweise möglich, ein Diamin **DA** der Formel (IV) mit einer Mischung enthaltend ein Aldehyd **ALD** und ein Dialdehyd umzusetzen. Ebenso ist es möglich, hierfür ein Aldehyd-Gemisch einzusetzen, welches neben einem Aldehyd **ALD** weitere Aldehyde enthält.

Die Zusammensetzung kann zusätzlich zu mindestens einem aromatische Isocyanatgruppen aufweisenden Polyisocyanat **P** und zu mindestens einem Dialdimin **A** der Formel (I) weitere Hilfs- und Zusatzstoffe enthalten.

Die Zusammensetzung reagiert mit Wasser bzw. Feuchtigkeit und wird dadurch vernetzt. Ist genügend Wasser vorhanden, um einen Grossteil oder alle Isocyanatgruppen umzusetzen, entsteht eine ausgehärtete Zusammensetzung, die exzellente mechanische Eigenschaften aufweist. Die Zusammensetzung kann deshalb als "feuchtigkeitshärtend" bezeichnet werden.

Die Zusammensetzung kann in der Form einer einkomponentigen Zusammensetzung oder in der Form einer zweikomponentigen Zusammensetzung vorliegen. Einkomponentige Zusammensetzungen weisen den Vorteil auf, dass sie ohne Mischvorgang applizierbar sind, während zweikomponentige Zusammensetzungen den Vorteil aufweisen, dass sie rascher aushärten und als Bestandteile Substanzen enthalten können, welche zusammen mit Isocyanaten nicht lagerfähig sind.

In einer Ausführungsform liegt die Zusammensetzung in der Form einer einkomponentigen Zusammensetzung vor.

Als aromatische Isocyanatgruppen aufweisendes Polyisocyanat **P** ist in der einkomponentigen Zusammensetzung ein Polyurethanpolymer **PUP,** wie es vorgängig beschrieben wurde, bevorzugt.

Als Hilfs- und Zusatzstoffe für die einkomponentige Zusammensetzung sind beispielsweise die folgenden Substanzen geeignet:
- Weichmacher, beispielsweise Carbonsäureester wie Phthalate, beispielsweise Dioctylphthalat, Diisononylphthalat oder Diisodecylphthalat, Adipate, beispielsweise Dioctyladipat, Azelate und Sebacate, organische Phosphor- und Sulfonsäureester oder Polybutene;
- Lösemittel;
- anorganische und organische Füllstoffe, zum Beispiel gemahlene oder gefällte Calciumcarbonate, welche gegebenenfalls mit Stearaten beschichtet sind, Russe, insbesondere industriell hergestellte Russe (im Folgenden als "Russ" bezeichnet), Baryt (BaSO₄, auch Schwerspat genannt), Kaoline, Aluminiumoxide, Aluminiumhydroxide, Kieselsäuren, insbesondere hochdisperse Kieselsäuren aus Pyrolyseprozessen, PVC-Pulver oder Hohlkugeln;
- Fasern, beispielsweise aus Polyethylen;
- Pigmente, beispielsweise Titandioxid oder Eisenoxide;
- Katalysatoren, welche die Hydrolyse der Aldiminogruppen beschleunigen, insbesondere Säuren oder zu Säuren hydrolysierbare Verbindungen, beispielsweise organische Carbonsäuren wie Benzoesäure, Salicylsäure oder 2-Nitrobenzoesäure, organische Carbonsäureanhydride wie Phthalsäureanhydrid oder Hexahydrophthalsäureanhydrid, Silylester von organischen Carbonsäuren, organische Sulfonsäuren wie Methansulfonsäure, p-Toluolsulfonsäure oder 4-Dodecylbenzolsulfonsäure, oder weitere organische oder anorganische Säuren;
- Katalysatoren, welche die Reaktion der Isocyanatgruppen mit Wasser beschleunigen, insbesondere Metallverbindungen, beispielsweise Zinnverbindungen wie Dibutylzinndiacetat, Dibutylzinndilaurat, Dibutylzinndistearat, Dibutylzinndiacetylacetonat, Dioctylzinndilaurat, Dibutylzinndichlorid und Dibutylzinnoxid, Zinn(II)-carboxylate, Stannoxane wie Laurylstannoxan, Bismutverbindungen wie Bismut(III)-octoat, Bismut(III)-neodecanoat oder Bismut(III)-oxinate; sowie tertiäre Amine, beispielsweise 2,2'-Dimorpholinodiethylether und andere Morpholinether-Derivate;
- Rheologie-Modifizierer wie beispielsweise Verdickungsmittel oder Thixotropiermittel, zum Beispiel Harnstoffverbindungen, Polyamidwachse, Bentonite oder pyrogene Kieselsäuren;
- Reaktivverdünner und Vernetzer, beispielsweise monomere Polyisocyanate wie MDI, TDI, Gemische aus MDI und MDI-Homologen (polymeres MDI oder PMDI), sowie Oligomere dieser Polyisocyanate, insbesondere in Form von Isocyanuraten, Carbodiimiden, Uretoniminen, Biureten, Allophanaten oder Iminooxadiazindionen, Addukte monomerer Polyisocyanate mit kurzkettigen Polyolen, sowie Adipinsäuredihydrazid und andere Dihydrazide, sowie blockierte Amine in Form von Aldiminen, Ketiminen, Oxazolidinen oder Enaminen;
- Trocknungsmittel, wie beispielsweise Molekularsiebe, Calciumoxid, hochreaktive Isocyanate wie p-Tosylisocyanat, Orthoameisensäureester, Alkoxysilane wie Tetraethoxysilan, Organoalkoxysilane wie Vinyltrimethoxysilan, und Organoalkoxysilane, welche in α-Stellung zur Silangruppe eine funktionelle Gruppe aufweisen;
- Haftvermittler, insbesondere Organoalkoxysilane wie beispielsweise Epoxysilane, Vinylsilane, (Meth)acrylsilane, Isocyanatosilane, Carbamatosilane, S-(Alkylcarbonyl)-mercaptosilane und Aldiminosilane, sowie oligomere Formen dieser Silane;
- Stabilisatoren gegen Wärme, Licht- und UV-Strahlung;
- flammhemmende Substanzen;
- oberflächenaktive Substanzen wie beispielsweise Netzmittel, Verlaufsmittel, Entlüftungsmittel oder Entschäumer;
- Biozide wie beispielsweise Algizide, Fungizide oder das Pilzwachstum hemmende Substanzen.

Es ist vorteilhaft, darauf zu achten, dass solche Zusätze die Lagerstabilität der Zusammensetzung nicht beeinträchtigen. Das heisst, dass diese Zusätze während der Lagerung die zur Vernetzung führenden Reaktionen wie Hydrolyse der Aldiminogruppen oder Vernetzung der Isocyanatgruppen nicht in signifikantem Ausmass auslösen dürfen. Insbesondere bedeutet dies, dass all diese Zusätze kein oder höchstens Spuren von Wasser enthalten sollten. Es kann deshalb sinnvoll sein, gewisse Zusätze vor dem Einmischen in die Zusammensetzung chemisch oder physikalisch zu trocknen.

Bevorzugt enthält die einkomponentige Zusammensetzung neben mindestens einem Polyisocyanat **P** und mindestens einem Dialdimin **A** der Formel (I) mindestens einen Katalysator. Der Katalysator ist insbesondere eine der genannten Säuren, wie Benzoesäure oder Salicylsäure, oder eine der genannten Metallverbindungen oder eine der genannten tertiären Amine. Insbesondere handelt es sich bei diesem Katalysator um einen Katalysator, welcher die Hydrolyse der Aldiminogruppen beschleunigt, bevorzugt eine Säure. Es kann durchaus auch vorteilhaft sein, wenn unterschiedliche Katalysatoren, bzw. unterschiedliche Katalysatorenarten, miteinander gemischt werden.

Die einkomponentige Zusammensetzung wird vorzugsweise unter Ausschluss von Feuchtigkeit hergestellt und aufbewahrt. In einer geeigneten klimadichten Verpackung oder Anordnung, wie beispielsweise einem Fass, einem Beutel oder einer Kartusche, verfügt sie über eine hervorragende Lagerstabilität. Mit den Begriffen "lagerstabil" und "Lagerstabilität" in Zusammenhang mit einer Zusammensetzung wird im vorliegenden Dokument der Sachverhalt bezeichnet, dass die Viskosität der Zusammensetzung bei gegebener Applikationstemperatur und bei geeigneter Lagerung in der betrachteten Zeitspanne nicht oder höchstens so stark ansteigt, dass die Zusammensetzung auf die vorgesehene Weise verwendbar bleibt.

Kommt die einkomponentige Zusammensetzung in Kontakt mit Feuchtigkeit bzw. Wasser, beginnen die Aldiminogruppen des Dialdimins **A** zu hydrolysieren. Die in der Zusammensetzung vorhandenen Isocyanatgruppen reagieren darauf mit den hydrolysierenden Aldiminogruppen, wobei mindestens ein Aldehyd **ALD** der Formel (V) freigesetzt wird. Im Verhältnis zu den Aldiminogruppen überschüssige Isocyanatgruppen reagieren direkt mit Wasser. Als Ergebnis dieser Reaktionen vernetzt die Zusammensetzung und härtet schliesslich zu einem festen Material aus. Die Reaktion der Isocyanatgruppen mit den hydrolysierenden Aldiminogruppen muss dabei nicht notwendigerweise über freie Aminogruppen erfolgen; es sind auch Reaktionen mit Zwischenstufen der Hydrolysereaktion möglich. Beispielsweise ist es denkbar, dass eine hydrolysierende Aldiminogruppe in der Form eines Halbaminals direkt mit einer Isocyanatgruppe reagiert.

Das für die Aushärtungsreaktion benötigte Wasser kann entweder aus der Luft stammen (Luftfeuchtigkeit), oder aber die Zusammensetzung kann mit einer Wasser enthaltenden Komponente in Kontakt gebracht werden, zum Beispiel durch Besprühen, oder es kann der Zusammensetzung bei der Applikation eine Wasser enthaltende Komponente zugesetzt werden, insbesondere durch Einmischen.

Die Zusammensetzung härtet im Allgemeinen blasenfrei aus, insbesondere auch bei hoher Aushärtungsgeschwindigkeit.

Die Aushärtungsgeschwindigkeit lässt sich über die Art und Menge eines oder mehrerer gegebenenfalls vorhandener Katalysatoren, über die bei der Aushärtung herrschende Temperatur sowie über die Luftfeuchtigkeit bzw. die Menge zugesetzten Wassers beeinflussen.

Wird der Zusammensetzung eine Wasser enthaltene Komponente zugesetzt, erfolgt die Aushärtung der Zusammensetzung stark beschleunigt im Vergleich zur Aushärtung ausschliesslich mit Luftfeuchtigkeit. Für diesen Fall ist die verlängerte Offenzeit der hier beschriebenen Zusammensetzungen ein besonders grosser Vorteil. Auf diese Weise sind Zusammensetzungen erhältlich, welche bei einer praxistauglichen Offenzeit über eine sehr schnelle Aushärtung verfügen.

In einer weiteren Ausführungsform liegt die Zusammensetzung in der Form einer zweikomponentigen Zusammensetzung vor. Eine zweikomponentige Zusammensetzung besteht aus einer Komponente **K1** und einer Komponente **K2,** welche getrennt voneinander gelagert und erst kurz vor der Applikation miteinander vermischt werden.

In einer Ausführungsform einer zweikomponentigen Zusammensetzung sind das aromatische Isocyanatgruppen aufweisende Polyisocyanat **P** und das Dialdimin **A** der Formel (I) Teil der ersten Komponente **K1,** und die zweite Komponente **K2** enthält gegenüber Isocyanatgruppen reaktive Verbindungen, insbesondere Wasser und/oder Polyole und/oder Polyamine.

In einer anderen Ausführungsform einer zweikomponentigen Zusammensetzung ist das aromatische Isocyanatgruppen aufweisende Polyisocyanat **P** Teil der ersten Komponente **K1,** während die zweite Komponente **K2** das Dialdimin **A** der Formel (I) sowie gegenüber Isocyanatgruppen reaktive Verbindungen, insbesondere Wasser und/oder Polyole und/oder Polyamine, enthält.

Bevorzugt enthält die Komponente **K2** mindestens ein Dialdimin **A** der Formel (I) und Wasser.

Bevorzugt enthält die Komponente **K2** mindestens ein Dialdimin **A** der Formel (I) und mindestens ein Polyol, wobei in der Zusammensetzung bevorzugt 0.3 bis 1 Equivalent Aldiminogruppen pro Equivalent Hydroxylgruppen vorhanden sind.

Besonders bevorzugt enthält die Komponente **K2** mindestens ein Dialdimin **A** der Formel (I), mindestens ein Polyol sowie Wasser, wobei in der Zusammensetzung bevorzugt 0.3 bis 1 Equivalent Aldiminogruppen pro Equivalent Hydroxylgruppen des Polyols vorhanden sind, und das Wasser bezogen auf die Aldiminogruppen bevorzugt unterstöchiometrisch vorhanden ist.

In beiden oben beschriebenen Ausführungsformen der zweikomponentigen Zusammensetzungen sind geeignete Polyole dieselben handelsüblichen Polyole, wie sie bereits als geeignet zur Herstellung eines Polyurethanpolymers **PUP** erwähnt wurden, sowie diejenigen niedrigmolekularen zwei- oder mehrwertigen Alkohole, wie sie vorgängig als geeignet zum Mitverwenden bei der Herstellung eines Polyurethanpolymers **PUP** erwähnt wurden. Falls die Komponente **K2** Wasser enthält, ist es vorteilhaft, wenn die Menge des Wassers höchstens derart bemessen ist, wie sie zur Hydrolyse des Dialdimins **A** - und gegebenenfalls allfälliger weiterer latenter Härter - benötigt wird. Zudem können beide Komponenten weitere Hilfs- und Zusatzstoffe, wie sie bereits vorgängig für eine einkomponentige Zusammensetzung erwähnt wurden, enthalten. Im Falle der Komponente **K2** sind jedoch zusätzlich noch weitere Hilfs- und Zusatzstoffe möglich. Insbesondere sind dies solche Hilfs- und Zusatzstoffe, welche zusammen mit aromatischen Isocyanatgruppen nicht oder nur kurzzeitig lagerfähig sind. Insbesondere sind dies Katalysatoren wie:
Verbindungen von Zink, Mangan, Eisen, Chrom, Cobalt, Kupfer, Nickel, Molybdän, Blei, Cadmium, Quecksilber, Antimon, Vanadium, Titan, Zirconium oder Kalium, wie Zink(II)-acetat, Zink(II)-2-ethylhexanoat, Zink(II)-laurat, Zink(II)-oleat, Zink(II)-naphthenat, Zink(II)-acetylacetonat, Zink(II)-salicylat, Mangan(II)-2-ethylhexanoat, Eisen(III)-2-ethylhexanoat, Eisen(III)-acetylacetonat, Chrom(III)-2-ethylhexanoat, Cobalt(II)-naphthenat, Cobalt(II)-2-ethylhexanoat, Kupfer(II)-2-ethylhexanoat, Nickel(II)-naphthenat, Phenylquecksilber-neodecanoat, Blei(II)-acetat, Blei(II)-2-ethylhexanoat, Blei(II)-neodecanoat, Blei(II)-acetylacetonat, Aluminiumlactat, Aluminiumoleat, Aluminium(III)-acetylacetonat, Diisopropoxytitan-bis-(ethylacetoacetat), Dibutoxytitan-bis-(ethylacetoacetat), Dibutoxytitan-bis-(acetylacetonat), Kalium-acetat, Kaliumoctoat; tertiäre Amine wie Triethylamin, Tributylamin, N-Ethyl-diisopropylamin, N,N,N',N'-Tetramethyl-ethylendiamin, Pentamethyl-diethylentriamin und höhere Homologe davon, N,N,N',N'-Tetramethyl-propylendiamin, Pentamethyl-dipropylentriamin und höhere Homologe davon, N,N,N',N'-Tetramethyl-1,3-butandiamin, N,N,N',N'-Tetramethyl-1,6-hexandiamin, Bis-(dimethylamino)-methan, N,N-Dimethylbenzylamin, N,N-Dimethylcyclohexylamin, N-Methyl-dicyclohexylamin, N,N-Dimethyl-hexadecylamin, Bis-(N,N-diethylaminoethyl)-adipat, N,N-Dimethyl-2-phenylethylamin, Tris-(3-dimethylaminopropyl)-amin, 1,4-Diazabicyclo[2.2.2]octan (DABCO), 1,8-Diazabicyclo[5.4.0]undec-7-en (DBU), 1,5-Diazabicyclo[4.3.0]non-5-en (DBN), N-Methylmorpholin, N-Ethylmorpholin, N-Cocomorpholin, N,N'-Dimethylpiperazin, N-Methyl-N'-dimethylaminoethyl-piperazin, Bis-(dimethylaminoethyl)-piperazin, 1,3,5-Tris-(dimethylaminopropyl)-hexahydrotriazin, Bis-(2-dimethylaminoethyl)-ether; stickstoffaromatische Verbindungen wie 4-Dimethylamino-pyridin, N-Methylimidazol, N-Vinylimidazol oder 1,2-Dimethylimidazol; Amidine und Guanidine wie 1,1,3,3-Tetramethylguanidin; tertiäre Amine enthaltend aktive Wasserstoffatome, wie Triethanolamin, Triisopropanolamin, N-Methyldiethanolamin, N,N-Dimethylethanolamin, 3-(Dimethylamino)-propyl-diisopropanolamin, Bis-(3-(dimethylamino)-propyl)-isopropanolamin, Bis-(3-dimethylaminopropyl)amin, 3-(Dimethylamino)-propyl-harnstoff, Mannich-Basen wie 2,4,6-Tris-(dimethylaminomethyl)-phenol oder 2,4,6-Tris-(3-(dimethylamino)-propylaminomethyl)-phenol, N-Hydroxypropylimidazol, N-(3-Aminopropyl)-imidazol, sowie Alkoxylierungs- und Polyalkoxylierungsprodukte dieser Verbindungen, beispielsweise Dimethylaminoethoxyethanol; organische Ammoniumverbindungen wie Benzyltrimethylammoniumhydroxid oder alkoxylierte tertiäre Amine; sogenannte "delayed action"-Katalysatoren, welche Modifizierungen bekannter Metall- oder Aminkatalysatoren darstellen, wie Umsetzungsprodukte aus tertiären Aminen und Carbonsäuren oder Phenolen, beispielsweise aus 1,4-Diazabicyclo[2.2.2]octan oder DBU und Ameisensäure oder Essigsäure; sowie Kombinationen der genannten Verbindungen, insbesondere von Metallverbindungen und tertiären Aminen.

Bevorzugt enthält die Komponente **K2** keine Isocyanatgruppen.

Falls die Zusammensetzung weitere blockierte Amine, insbesondere Aldimine, Ketimine, Oxazolidine oder Enamine, enthält, können diese Teil der Komponente **K1** und/oder **K2** sein. Als Aldimine sind insbesondere andere Aldimine als die Dialdimine **A** geeignet, welche erhältlich sind ausgehend von anderen Aminen als denjenigen der Formel (IV), und/oder ausgehend von anderen Aldehyden als denjenigen der Formel (V). Alle diese blockierten Amine haben die Eigenschaft, bei ihrer Hydrolyse Aminogruppen freizusetzen, welche schnell mit vorhandenen Isocyanatgruppen reagieren.

Die Herstellung der beiden Komponenten **K1** und **K2** erfolgt getrennt voneinander, mindestens für die Komponente **K1** unter Ausschluss von Feuchtigkeit. Die beiden Komponenten **K1** und **K2** sind getrennt voneinander lagerstabil, d.h. sie können jede in einer geeigneten Verpackung oder Anordnung, wie beispielsweise in einem Fass, einem Hobbock, einem Beutel, einem Eimer oder einer Kartusche, vor ihrer Anwendung während mehreren Monaten bis zu einem Jahr und länger aufbewahrt werden, ohne dass sie sich in ihren jeweiligen Eigenschaften in einem für ihren Gebrauch relevanten Ausmass verändern.

Das Mischungsverhältnis zwischen den beiden Komponenten **K1** und **K2** wird bevorzugt so gewählt, dass die gegenüber Isocyanatgruppen reaktiven Gruppen der Komponenten **K1** und **K2** in einem geeigneten Verhältnis zu den Isocyanatgruppen der Komponente **K1** stehen. In der zweikomponentigen Zusammensetzung sind vor der Aushärtung geeigneterweise 0.1 bis 1.1, bevorzugt 0.5 bis 0.95, besonders bevorzugt 0.6 bis 0.95 Equivalent der Summe der gegenüber Isocyanaten reaktiven Gruppen pro Equivalent Isocyanatgruppen vorhanden, wobei die Aldiminogruppen und gegebenenfalls vorhandene weitere blockierte Aminogruppen zu den gegenüber Isocyanaten reaktiven Gruppen gezählt werden, und Wasser nicht zu den gegenüber Isocyanaten reaktiven Gruppen gerechnet wird. Überschüssige Isocyanatgruppen reagieren insbesondere direkt mit Wasser, beispielsweise mit Luftfeuchtigkeit.

Vor oder während der Applikation der zweikomponentigen Zusammensetzung werden die beiden Komponenten mittels eines geeigneten Verfahrens miteinander vermischt. Das Mischen kann kontinuierlich oder batchweise erfolgen. Die vermischte Zusammensetzung wird während dem Mischen oder anschliessend an das Mischen appliziert, indem sie mit einer Festkörperoberfläche kontaktiert wird, gegebenenfalls mittels eines geeigneten Hilfsmittels. Dabei muss darauf geachtet werden, dass zwischen dem Vermischen der Komponenten **K1** und **K2** und der Applikation nicht zuviel Zeit vergeht, da es dadurch zu Störungen, wie beispielsweise einem verlangsamten oder unvollständigen Aufbau der Haftung zur Festkörperoberfläche, kommen kann. Die maximale Zeitspanne, innerhalb welcher die vermischte Zusammensetzung appliziert sein sollte, wird als "Topfzeit" oder auch als "Offenzeit" bezeichnet. Oft wird als Offenzeit die Zeit definiert, in welcher sich die Viskosität der vermischten Zusammensetzung verdoppelt.

Nach dem Vermischen der Komponenten **K1** und **K2** beginnt die Aushärtung. Das Dialdimin **A** der Formel (I) beginnt in der bereits beschriebenen Weise zu hydrolysieren und mit den Isocyanatgruppen zu reagieren, sobald es mit Wasser in Kontakt kommt. Entweder ist das Wasser in der vermischten Zusammensetzung bereits vorhanden - indem es ein Bestandteil der Komponente **K2** war, oder indem es der Zusammensetzung vor oder während dem Vermischen der beiden Komponenten **K1** und **K2** zugesetzt wurde -, oder das Wasser diffundiert in der Form von Luftfeuchtigkeit in die vermischte Zusammensetzung. Im letztgenannten Fall erfolgt die Reaktion des Dialdimins **A** mit den Isocyanatgruppen von aussen nach innen, parallel zum Eindringen der Luftfeuchtigkeit in die Zusammensetzung. Wie bereits beschrieben, muss die Reaktion der Isocyanatgruppen mit den hydrolysierenden Aldiminogruppen nicht notwendigerweise über freie Aminogruppen erfolgen, sondern kann auch über Zwischenstufen der Hydrolysereaktion erfolgen. Auf die gleiche Weise werden die Reaktivgruppen von weiteren gegebenenfalls in der Zusammensetzung vorhandenen latenten Härtern freigesetzt. Weiterhin reagieren nach dem Vermischen der Komponenten **K1** und **K2** die in der Zusammensetzung gegebenenfalls vorhandenen gegenüber Isocyanatgruppen reaktiven Verbindungen, wie insbesondere Polyole und Polyamine, mit den Isocyanatgruppen. Überschüssige Isocyanatgruppen reagieren insbesondere direkt mit Wasser. Als Ergebnis dieser Reaktionen vernetzt die vermischte Zusammensetzung und härtet schliesslich zu einem festen Material aus.

Die Aushärtung erfolgt im Allgemeinen blasenfrei, insbesondere auch bei hoher Aushärtungsgeschwindigkeit.

Die Aushärtungsgeschwindigkeit lässt sich über die Art und Menge eines oder mehrerer gegebenenfalls vorhandener Katalysatoren, über die bei der Aushärtung herrschende Temperatur sowie über die Luftfeuchtigkeit bzw. die Menge des über die Komponente **K2** eingebrachten Wassers beeinflussen.

Sowohl in der einkomponentigen wie auch in der zweikomponentigen Ausführungsform besitzt die beschriebene Zusammensetzung einerseits eine lange Offenzeit und andererseits eine hohe Aushärtungsgeschwindigkeit. Die Kombination aus langer Offenzeit und rascher Aushärtung ist für viele einkomponentige und zweikomponentige Anwendungen äusserst erwünscht.

So ist die Anwendung einer einkomponentigen Zusammensetzung oft einfacher, wenn nach deren Applikation noch etwas Zeit bleibt, um die Zusammensetzung in die erwünschte Form zu bringen, bevor sich eine Haut aus angehärtetem Material auf der Oberfläche gebildet hat. Beispielsweise soll ein Fugendichtstoff noch ausreichend lange Zeit nach der Applikation abgeglättet werden können; ein Klebstoff soll noch rückstellungsfrei verschoben werden können, um die Fügeteile exakt auszurichten; eine Beschichtung oder ein Belag sollen noch egalisiert oder mit beispielsweise Gummigranulat, Sand oder Farbchips eingestreut werden können. Anschliessend soll die Zusammensetzung aber schnell aushärten, damit sie möglichst bald belastet werden kann und/oder damit sie durch Stäube nicht mehr verschmutzbar ist.

Auch die Anwendung einer zweikomponentigen Zusammensetzung ist oft wesentlich einfacher, wenn diese eine verlängerte Offenzeit aufweist, müssen doch sowohl der Mischvorgang als auch die Applikation der Zusammensetzung, und gegebenenfalls notwendige Nachbearbeitungsschritte, beispielsweise um die Zusammensetzung in die erwünschte Form zu bringen, innerhalb der Offenzeit erfolgen. Ein zweikomponentiger Bodenbelag beispielsweise, welcher batchweise gemischt und anschliessend auf den Untergrund aufgegossen und egalisiert wird, sollte eine lange Offenzeit aufweisen, damit die Applikation ohne Zeitdruck exakt ausgeführt werden können. Anschliessend soll die Zusammensetzung aber rasch aushärten, um möglichst bald belastbar zu sein. Bei einem Bodenbelag ist es oft eine unabdingbare Voraussetzung, dass der Belag spätestens am Folgetag der Applikation soweit ausgehärtet ist, dass er begehbar ist, so dass darauf weitere Arbeiten ausgeführt werden können.

Im Fall einer einkomponentigen Zusammensetzung wird als Mass für die Offenzeit üblicherweise die Hautbildungszeit bestimmt. Unter der "Hautbildungszeit" wird dabei die Zeitspanne verstanden, die zwischen der Applikation der Zusammensetzung und der Bildung einer Haut aus angehärtetem Material auf der Oberfläche der applizierten Zusammensetzung liegt. Als Mass für die Aushärtungsgeschwindigkeit einer von aussen nach innen härtenden einkomponentigen Zusammensetzung wird üblicherweise die sogenannte Durchhärtung bestimmt. Dabei wird beispielsweise die Dicke der ausgehärteten Schicht gemessen, die sich unter definierten Bedingungen nach einer gegebenen Zeitspanne in der applizierten Zusammensetzung gebildet hat; oder es wird die Zeit gemessen, die benötigt wird, um die in gegebener Schichtdicke applizierte Zusammensetzung unter definierten Bedingungen vollständig auszuhärten.

Im Fall einer zweikomponentigen Zusammensetzung kann als Mass für die Offenzeit die Zeitspanne bestimmt werden, innerhalb welcher nach dem Vermischen der beiden Komponenten beispielsweise ein bestimmter Viskositätsanstieg (beispielsweise eine Verdoppelung) erfolgt ist, oder die Zusammensetzung eine klebfreie Oberfläche aufweist. Als Mass für die Aushärtungsgeschwindigkeit einer zweikomponentigen Zusammensetzung kann beispielsweise der Anstieg der Härte, beispielsweise der Shore-Härte, im Verlauf der Zeit bestimmt werden.

Dank den erfindungsgemässen Zusammensetzungen ist es nun möglich, verlängerte Offenzeit und hohe Aushärtungsgeschwindigkeiten miteinander kombiniert in einer Zusammensetzung zu realisieren.

Der Effekt der verlängerten Offenzeit bei hoher Aushärtungsgeschwindigkeit ist deutlich feststellbar, wie die nachfolgenden Beispiele aufzeigen. Die Gründe dafür wurden bisher nicht im Detail untersucht. Es ist aber anzunehmen, dass der Effekt sich auf die beschriebene Asymmetrie der Dialdimine **A** der Formel (I), bzw. der davon abgeleiteten Diamine **DA** der Formel (IV), zurückführen lässt. Beim Zutritt von Wasser reagieren zunächst fast ausschliesslich die reaktiveren Aldiminogruppen des Dialdimins **A,** bzw. die reaktiveren Aminogruppen des Diamins **DA,** mit den Isocyanatgruppen des Polyisocyanates **P.** Dies führt jedoch noch nicht zu einer Vernetzung der Zusammensetzung, sondern lediglich zu einer leichten Viskositätserhöhung, was die Offenzeit kaum einschränkt. Erst wenn die reaktiveren Aldiminogruppen, bzw. Aminogruppen, weitgehend aufgebraucht sind, beginnen auch die langsameren Aldiminogruppen, bzw. Aminogruppen, mit weiteren Isocyanatgruppen zu reagieren, was nun unmittelbar zur Vernetzung der Zusammensetzung führt und die Aushärtung stark vorantreibt.

Wie beschrieben, beruhen die Dialdimine A der Formel (I) auf speziellen asymmetrischen Diaminen **DA** der Formel (IV) und tertiären Aldehyden **ALD** der Formel (V). Die in der unterschiedlichen Substitution begründete unterschiedliche Reaktivität der beiden Aminogruppen in einem Diamin **DA** überträgt sich direkt auf ein Dialdimin dieses Diamins **DA,** in dem die beiden Aldiminogruppen ebenfalls eine unterschiedliche Reaktivität aufweisen. Im besonderen Fall eines Dialdimins **A** wird der Reaktivitätsunterschied in den Aldiminogruppen, bedingt durch die tertiäre - und damit sterisch anspruchsvolle - Struktur des der Aldiminogruppe zugrunde liegenden Aldehyds **ALD,** vermutlich sogar noch verstärkt, indem der sterisch anspruchsvolle Aldehyd-Rest die Zugänglichkeit der Aldiminogruppen - insbesondere, wenn diese in halbhydrolysierter Form als Halbaminal-Gruppen vorliegen - zusätzlich einschränkt und dadurch die Reaktivität der langsameren Aldiminogruppe gegenüber jener der schnelleren Aldiminogruppe überproportional erniedrigt.

Durch die Verwendung der bevorzugten geruchsfreien Dialdimine **A** lassen sich vor allem auch Zusammensetzungen erhalten, welche vor, während und nach der Aushärtung geruchsfrei sind. Diese Eigenschaft stellt einen grossen Vorteil gegenüber dem Stand der Technik dar und erweitert die Einsatzmöglichkeiten dieser Zusammensetzungen bedeutend.

Die beschriebenen Zusammensetzungen sind besonders geeignet als ein- und zweikomponentige Klebstoffe, Dichtstoffe, Vergussmassen oder Beschichtungen, insbesondere Bodenbeschichtungen. Insbesondere geeignet sind sie als elastische Klebstoffe, elastische Dichtstoffe, elastische Vergussmassen oder elastische Beschichtungen. Besonders bevorzugt finden sie Anwendung als elastische Dichtstoffe, da die Verwendung der speziellen Dialdimine **A** im ausgehärteten Zustand besonders weichelastische Eigenschaften ergibt.

Insbesondere eignet sich die beschriebene Zusammensetzung als weichelastischer Dichtstoff zum Abdichten von Fugen aller Art, insbesondere von Bewegungsfugen in Bauwerken. Sogenannte Bewegungsfugen sind Fugen, welche an geeigneten Stellen und in geeigneter Breite in Bauwerken vorhanden sind, um Bewegungen zwischen Bauteilen aus starren Baumaterialien wie Beton, Stein, Kunststoff und Metall zu überbrücken. Solche Bewegungen entstehen einerseits durch Erschütterungen und andererseits durch Temperaturveränderungen. In der Kälte ziehen sich die starren Materialien zusammen, wodurch die Fugen breiter werden, und in der Wärme dehnen sie sich aus, wodurch die Fugen enger werden. Ein Dichtstoff, der solche Fugen dauerhaft abdichten soll, muss weichelastische Eigenschaften aufweisen, um bei seiner Ausdehnung und bei seiner Kompression in der Fuge möglichst wenig Kraft auf die Substrate zu übertragen und diese somit möglichst wenig zu belasten. Unter weichelastischen Eigenschaften wird hierbei eine hohe Dehnbarkeit bei einem tiefen Dehnspannungswert und einem guten Rückstellvermögen verstanden. Der Begriff "Dehnspannung" bezeichnet die Spannung, welche in einem Material im gedehnten Zustand wirkt.

Besonders tiefe Dehnspannungswerte im ausgehärteten Zustand weisen Dichtstoff-Zusammensetzungen auf, welche mindestes ein Dialdimin **A** enthalten, bei welchem X in der Formel (I) für den Rest eines Diamins **DA** ausgewählt aus der Gruppe bestehend aus TMD, IPDA und 1,5-Diamino-2-butyl-2-ethyl-pentan steht.

Die Erfindung betrifft in einem weiteren Aspekt ein Verfahren zum Verkleben von einem Substrat **S1** mit einem Substrat **S2.** Dieses Verfahren umfasst die Schritte:
i) Applikation einer vorgängig beschriebenen Zusammensetzung auf ein Substrat **S1;**
ii) Kontaktieren der applizierten Zusammensetzung mit einem Substrat **S2** innerhalb der Offenzeit der Zusammensetzung;
oder
i') Applikation einer vorgängig beschriebenen Zusammensetzung auf ein Substrat **S1** und auf ein Substrat **S2;**
ii') Kontaktieren der applizierten Zusammensetzung miteinander innerhalb der Offenzeit der Zusammensetzung;
wobei das Substrat **S2** aus dem gleichen oder einem unterschiedlichen Material wie das Substrat **S1** besteht.

Zudem betrifft die Erfindung ein Verfahren zum Abdichten, welches den Schritt umfasst:
i") Applikation einer vorgängig beschriebenen Zusammensetzung zwischen ein Substrat **S1** und ein Substrat **S2,** so dass die Zusammensetzung mit dem Substrat **S1** und dem Substrat **S2** in Kontakt steht;
wobei das Substrat **S2** aus dem gleichen oder einem unterschiedlichen Material wie das Substrat **S1** besteht.

Der Zwischenraum, der sich beim Verfahren zum Abdichten zwischen Substrat **S1** und **S2** befindet, wird vom Fachmann als Fuge bezeichnet. Üblicherweise wird hierbei die Zusammensetzung aus Kartuschen in die vorbereiteten Fugen gepresst und anschliessend von Hand abgeglättet, wobei ein meist mit Seifenwasser benetztes Werkzeug, beispielsweise ein Spatel, oder der mit Seifenwasser benetzte Finger des Verarbeiters so über den applizierten Dichtstoff bewegt wird, dass dieser eine glatte und ebene, ganz leicht nach innen gewölbte Oberfläche aufweist. Da der Verarbeiter den applizierten Dichtstoff oft erst abglättet, wenn er eine grössere Fugen-Strecke appliziert hat, kann zwischen der Applikation und dem Abglätten des Dichtstoffes eine längere Zeit, beispielsweise bis zu einer Stunde, vergehen. Um ein sauberes Abglätten zu gewährleisten, ist es aber unabdingbar, dass sich auf der Dichtstoff-Oberfläche in dieser Zeit noch keine Haut aus angehärtetem Material gebildet hat. Dichtstoffe mit einer kurzen Offenzeit sind bei Dichtstoff-Verarbeitern deshalb unerwünscht. Trotzdem ist es wichtig, dass der Dichtstoff anschliessend an die lange Offenzeit schnell aushärtet und eine klebfreie Oberfläche bildet, da bei einer klebrigen, unausgehärteten Dichtstoff-Oberfläche die Gefahr einer Verschmutzung durch beispielsweise Staub und Sand gross ist. Andererseits sollte eine Dichtstoff-Zusammensetzung im ausgehärteten Zustand möglichst weichelastische Eigenschaften aufweisen. Diese Anforderungen kann die beschriebene Zusammensetzung äusserst gut erfüllen.

Schliesslich betrifft die Erfindung ein Verfahren zum Beschichten eines Substrates S1, welches den Schritt umfasst:
i''') Applikation einer Zusammensetzung gemäss einem der Ansprüche 1 bis 10 auf ein Substrat **S1** innerhalb der Offenzeit der Zusammensetzung.

Bei all diesen Verfahren können die Substrate **S1** und/oder **S2** eine Vielzahl von Materialien darstellen. Insbesondere stellen sie ein anorganisches Substrat, wie Glas, Glaskeramik, Beton, Mörtel, Backstein, Ziegel, Gips oder Naturstein, wie Granit oder Marmor; ein Metall oder eine Legierung, wie Aluminium, Stahl, Buntmetall, verzinktes Metall; ein organisches Substrat, wie Holz, einen Kunststoff, wie PVC, Polycarbonat, PMMA, Polyethylen, Polypropylen, Polyester, Epoxidharz, Polyurethan (PUR); ein beschichtetes Substrat, wie pulverbeschichtetes Metall oder Legierung; oder eine Farbe oder einen Lack, insbesondere einen Automobildecklack, dar.

Bei all diesen Verfahren können das Substrat **S1** und/oder das Substrat **S2** vor dem Verkleben oder Abdichten oder Beschichten vorbehandelt worden sein, insbesondere mit einem Primer oder einer Haftvermittlerzusammensetzung. Derartige Vorbehandlungen umfassen insbesondere physikalische und/oder chemische Reinigungs- und Aktivierungsverfahren, beispielsweise Schleifen, Sandstrahlen, Bürsten, Coronabehandlung, Plasmabehandlung, Beflammen, Anätzen oder dergleichen, oder Behandeln mit Reinigern oder Lösemitteln oder das Aufbringen eines Haftvermittlers, einer Haftvermittlerlösung oder eines Primers.

Aus diesen beschrieben Verfahren zum Verkleben, Abdichten bzw. Beschichten entsteht ein Artikel.

Dieser Artikel ist insbesondere ein Bauwerk, insbesondere ein Bauwerk des Hoch- oder Tiefbaus, oder ein industrielles Gut oder ein Konsumgut, insbesondere ein Fenster, eine Haushaltmaschine, oder ein Transportmittel, insbesondere ein Fahrzeug zu Wasser oder zu Lande, bevorzugt ein Automobil, ein Bus, ein Lastkraftwagen, ein Zug oder ein Schiff, oder ein Anbauteil eines Transportmittels.

### Beispiele

### Beschreibung der Messmethoden

**Infrarotspektren** wurden auf einem FT-IR Gerät 1600 von Perkin-Elmer (horizontale ATR-Messeinheit mit ZnSe-Kristall) gemessen, wobei die Substanzen unverdünnt als Film aufgetragen wurden. Die Absorptionsbanden sind in Wellenzahlen (cm⁻¹) angegeben (Messfenster: 4000-650 cm⁻¹).
**¹H-NMR-Spektren** wurden auf einem Spektrometer des Typs Bruker DPX-300 bei 300.13 MHz gemessen; die chemischen Verschiebungen δ sind angegeben in ppm relativ zu Tetramethylsilan (TMS), Kopplungskonstanten *J* sind angegeben in Hz. Echte und Pseudo-Kopplungsmuster wurden nicht unterschieden.

Die **Viskosität** wurde auf einem thermostatisierten Kegel-Platten-Viskosimeter Physica UM (Kegeldurchmesser 20 mm, Kegelwinkel 1°, Kegelspitze-Platten-Abstand 0.05 mm, Schergeschwindigkeit 10 bis 1000 s⁻¹) gemessen.

Der **Amingehalt** der hergestellten Dialdimine, das heisst der Gehalt an blockierten Aminogruppen in Form von Aldiminogruppen, wurde titrimetrisch bestimmt (mit 0.1N HClO₄ in Eisessig, gegen Kristallviolett) und ist stets angegeben in mmol N/g.

### a) Herstellung von Dialdiminen

### Dialdimin A-1

In einem Rundkolben wurden unter Stickstoffatmosphäre 55.0 g (0.19 mol) destilliertes 2,2-Dimethyl-3-lauroyloxy-propanal vorgelegt. Unter kräftigem Rühren wurden aus einem Eintropftrichter 15.6 g (0.18 mol N) 1-Amino-3-aminomethyl-3,5,5-trimethylcyclohexan (= Isophorondiamin, IPDA; Vestamin® IPD, Degussa; Amingehalt 11.68 mmol N/g) langsam zugegeben, wobei sich die Mischung erwärmte und zunehmend eintrübte. Danach wurden die flüchtigen Bestandteile im Vakuum entfernt (10 mbar, 80 °C). Ausbeute: 67.1 g eines klaren, farblosen Öls mit einem Amingehalt von 2.73 mmol N/g und einer Viskosität von 190 mPa·s bei 20 °C.
IR: 2952, 2922, 2852, 2819sh, 1738 (C=O), 1666 (C=N), 1464, 1418, 1394, 1378, 1364, 1350, 1298, 1248, 1236sh, 1158, 1112, 1048, 1020, 1000, 938, 928, 910, 894, 868, 772, 722.
¹H-NMR (CDCl₃, 300 K): δ 7.59 und 7.57 (2×*s*, total 1 H, CH=N ([Isomere]), 7.47 (s, 1 H, CH=N), 4.03 und 4.01 (2×s, 2x2 H, C(CH₃)₂-CH₂-O), 3.37 (m, 1 H, N-CH^{Cy}), 3.08 (*dd,* 2 H, *J* ≈ 11.1, N-C*H*₂-C^{Cy}), 2.30 (*t,* 4 H, *J* ≈ 7.5, OC(O)-C*H*₂-CH₂), 1.61 (*m*, 4 H, OC(O)-CH₂-C*H*₂), 1.60-0.85 (m, 65 H, übrige CH).

### Dialdimin A-2

In einem Rundkolben wurden unter Stickstoffatmosphäre 55.0 g (0.19 mol) destilliertes 2,2-Dimethyl-3-lauroyloxy-propanal vorgelegt. Unter kräftigem Rühren wurden aus einem Eintropftrichter 9.4 g (0.18 mol N) 1,3-Diaminopentan (DAMP; Dytek® EP Diamine, Invista; Amingehalt 19.42 mmol N/g) langsam zugegeben, wobei sich die Mischung erwärmte und zunehmend eintrübte. Danach wurden die flüchtigen Bestandteile im Vakuum entfernt (10 mbar, 80 °C). Ausbeute: 60.9 g eines klaren, blassgelben Öls mit einem Amingehalt von 3.01 mmol N/g und einer Viskosität von 50 mPa·s bei 20 °C. IR: 2955sh, 2922, 2868sh, 2852,1737(C=O),1666(C=N),1466,1419,1394, 1373, 1346, 1300, 1248, 1233, 1159, 1112, 1057, 1019, 1000, 935, 884, 769br, 722.

### Dialdimin A-3

In einem Rundkolben wurden unter Stickstoffatmosphäre 50.0 g (0.18 mol) destilliertes 2,2-Dimethyl-3-lauroyloxy-propanal vorgelegt. Unter kräftigem Rühren wurden aus einem Eintropftrichter 15.8 g (0.17 mol N) 1,5-Diamino-2-butyl-2-ethyl-pentan (Amingehalt 10.52 mmol N/g) langsam zugegeben, wobei sich die Mischung erwärmte und zunehmend eintrübte. Danach wurden die flüchtigen Bestandteile im Vakuum entfernt (10 mbar, 80 °C). Ausbeute: 62.6 g eines klaren, fast farblosen Öls mit einem Amingehalt von 2.64 mmol N/g und einer Viskosität von 100 mPa·s bei 20 °C.
IR: 2951, 2922, 2871sh,2852,2831sh,1738(C=O),1669(C=N),1463,1418, 1393,1375,1341,1302,1248,1234,1159,1112,1019,999,935, 874sh, 848sh, 777, 722.

### Dialdimin A-4

In einem Rundkolben wurden unter Stickstoffatmosphäre 79.4 g (0.28 mol) destilliertes 2,2-Dimethyl-3-lauroyloxy-propanal vorgelegt. Unter kräftigem Rühren wurden aus einem Eintropftrichter 20.0 g (0.25 mol N) 2,2(4),4-Trimethyl-hexamethylendiamin (Vestamin® TMD, Degussa; Amingehalt 12.64 mmol N/g) langsam zugegeben, wobei sich die Mischung erwärmte und zunehmend eintrübte. Danach wurden die flüchtigen Bestandteile im Vakuum entfernt (10 mbar, 80 °C). Ausbeute: 94.4 g eines klaren, blassgelben Öls mit einem Amingehalt von 2.66 mmol N/g und einer Viskosität von 63 mPa·s bei 20 °C. IR: 2954, 2920, 2852, 2822sh, 1737 (C=O), 1668 (C=N), 1466, 1418, 1392sh, 1374, 1365, 1348, 1301sh, 1248, 1234, 1158, 1112, 1020, 999, 932, 867, 722.

### Dialdimin A-5

In einem Rundkolben wurden unter Stickstoffatmosphäre 24.3 g (85 mmol) destilliertes 2,2-Dimethyl-3-lauroyloxy-propanal vorgelegt. Unter kräftigem Rühren wurden aus einem Eintropftrichter 5.0 g (81 mmol N) 4-Aminomethylanilin (= 4-Aminobenzylamin; Amingehalt 16.24 mmol N/g) langsam zugegeben, wobei sich die Mischung erwärmte und leicht eintrübte. Danach wurden die flüchtigen Bestandteile im Vakuum entfernt (10 mbar, 80 °C). Ausbeute: 27.6 g eines klaren, blassgelben Öls mit einem Amingehalt von 2.93 mmol N/g und einer Viskosität von 125 mPa·s bei 20 °C.

### Dialdimin A-6 (Vergleich)

In einem Rundkolben wurden unter Stickstoffatmosphäre 60.0 g (0.21 mol) destilliertes 2,2-Dimethyl-3-lauroyloxy-propanal vorgelegt. Unter kräftigem Rühren wurden aus einem Eintropftrichter 11.8 g (0.20 mol N) 1,5-Diamino-2-methylpentan (MPMD; Dytek® A, Invista; Amingehalt 17.04 mmol N/g) langsam zugegeben, wobei sich die Mischung erwärmte und zunehmend eintrübte. Danach wurden die flüchtigen Bestandteile im Vakuum entfernt (10 mbar, 80 °C). Ausbeute: 68.2 g eines klaren, blassgelben Öls mit einem Amingehalt von 2.94 mmol N/g und einer Viskosität von 53 mPa·s bei 20 °C.

### Dialdimin A-7 (Vergleich)

In einem Rundkolben wurden unter Stickstoffatmosphäre 80.9 g (0.27 mol) destilliertes 2,2-Dimethyl-3-lauroyloxy-propanal vorgelegt. Unter kräftigem Rühren wurden aus einem Eintropftrichter 25.2 g (0.26 mol N) 3(4),8(9)-Bis-(aminomethyl)-tricyclo[5.2.1.0^{2,6}]decan (TCD-Diamin, Celanese; Amingehalt 10.23 mmol N/g) langsam zugegeben, wobei sich die Mischung erwärmte und zunehmend eintrübte. Danach wurden die flüchtigen Bestandteile im Vakuum entfernt (10 mbar, 80 °C). Ausbeute: 100.8 g eines klaren, fast farblosen Öls mit einem Amingehalt von 2.56 mmol N/g.

### Dialdimin A-8 (Vergleich)

In einem Rundkolben wurden unter Stickstoffatmosphäre 74.3 g (0.26 mol) destilliertes 2,2-Dimethyl-3-lauroyloxy-propanal vorgelegt. Unter kräftigem Rühren wurden aus einem Eintropftrichter 30.0 g (0.25 mol N) Polyetherdiamin (Polyoxypropylen-Diamin mit einem mittleren Molekulargewicht von ca. 240 g/mol; Jeffamine® D-230, Huntsman; Amingehalt 8.29 mmol N/g) langsam zugegeben, wobei sich die Mischung erwärmte und zunehmend eintrübte. Danach wurden die flüchtigen Bestandteile im Vakuum entfernt (10 mbar, 80 °C). Ausbeute: 99.5 g eines klaren, blassgelben Öls mit einem Amingehalt von 2.50 mmol N/g.

### Dialdimin A-9 (Vergleich)

In einem Rundkolben wurden unter Stickstoffatmosphäre 50.9 g (0.18 mol) destilliertes 2,2-Dimethyl-3-lauroyloxy-propanal vorgelegt. Unter kräftigem Rühren wurden aus einem beheizten Eintropftrichter 10.0 g (0.17 mol N) 1,6-Hexamethylendiamin (BASF; Amingehalt 17.04 mmol N/g) langsam zugegeben, wobei sich die Mischung erwärmte und zunehmend eintrübte. Danach wurden die flüchtigen Bestandteile im Vakuum entfernt (10 mbar, 80 °C). Ausbeute: 57.7 g eines klaren, blassgelben Öls mit einem Amingehalt von 2.94 mmol N/g.

### b) Herstellung von Zusammensetzungen

### Beispiele 1 bis 5 und Vergleichsbeispiele 6 bis 8

Für jedes Beispiel wurden die jeweiligen Bestandteile gemäss Tabelle 1 in den angegebenen Gewichtsteilen ohne vorherige Trocknung in einen Polypropylenbecher mit Schraubverschluss eingewogen und mittels eines Zentrifugalmischers (SpeedMixer™ DAC 150, FlackTek Inc.; 1 min. bei 2500 U/min) gemischt, die Mischung sofort in eine innenlackierte Aluminiumtube abgefüllt und diese luftdicht verschlossen.

Das Polyurethanpolymer ***PUP-1*** wurde wie folgt hergestellt:
1300 g Polyoxypropylen-Diol (Acclaim® 4200 N, Bayer; OH-Zahl 28.5 mg KOH/g), 2600 g Polyoxypropylenpolyoxyethylen-Triol (Caradol® MD34-02, Shell; OH-Zahl 35.0 mg KOH/g), 600 g 4,4'-Methylendiphenyldiisocyanat (MDI; Desmodur® 44 MC L, Bayer) und 500 g Diisodecylphthalat (DIDP; Palatinol® Z, BASF) wurden bei 80 °C zu einem NCO-terminierten Polyurethanpolymeren mit einem Gehalt an freien Isocyanat-Gruppen von 2.05 Gewichts-% und einer Viskosität von 31.6 Pa·s bei 20 °C umgesetzt.

Das Verhältnis zwischen den Isocyanatgruppen und den Aldiminogruppen beträgt für alle Beispiele 1.0/0.70.

**Tabelle 1: Zusammensetzung der Beispiele 1 bis 5 und der Vergleichsbeispiele 6 bis 8.**

| Beispiel | **1** | **2** | **3** | **4** | **5** | **6 (Vgl)** | **7 (Vgl)** | **8 (Vgl)** |
|---|---|---|---|---|---|---|---|---|
| PUR-Polymer ***PUP-1*** | 50.0 | 50.0 | 50.0 | 50.0 | 50.0 | 50.0 | 50.0 | 50.0 |
| Dialdimin | ***A-1***, 6.26 | ***A-2***, 5.67 | ***A-3***, 6.47 | ***A-4***, 6.42 | ***A-5***, 5.82 | ***A-6***, 5.81 | ***A-7***, 6.67 | ***A-8***, 6.84 |
| Säurekatalysator^{a} | 0.1 | 0.1 | 0.1 | 0.1 | 0.1 | 0.1 | 0.1 | 0.1 |

| | | | | | | | | |
|---|---|---|---|---|---|---|---|---|
| ^{a}Salicylsäure (5 Gew.-% in Dioctyladipat). | | | | | | | | |

Die so erhaltenen Zusammensetzungen wurden auf Lagerstabilität, Offenzeit und Aushärtungsgeschwindigkeit geprüft.

Die **Lagerstabilität** wurde über die Veränderung der Viskosität während der Lagerung in der Wärme bestimmt. Dazu wurde die Zusammensetzung in der verschlossenen Tube im Ofen bei 60°C gelagert und die Viskosität bei 20 °C ein erstes Mal nach 12 Stunden und ein zweites Mal nach 7 Tagen Lagerdauer gemessen. Die Lagerstabilität ergibt sich aus der prozentualen Zunahme des zweiten Viskositätswerts gegenüber dem ersten.

Als Mass für die Offenzeit wurde die Hautbildungszeit (Zeit bis zur Klebefreiheit, "tack-free time") herangezogen. Zur Messung der **Hautbildungszeit** wurde ein kleiner Teil der während 2 Stunden bei 40 °C gelagerten, raumtemperaturwarmen Zusammensetzung in einer Schichtdicke von ca. 2 mm auf Pappkarton aufgetragen und bei 23 °C und 50% relativer Luftfeuchtigkeit die Zeit bestimmt, die es dauerte, bis beim leichten Antippen der Oberfläche der Zusammensetzung mittels einer Pipette aus LDPE erstmals keine Rückstände auf der Pipette mehr zurückblieben.

Als Mass für die Aushärtungsgeschwindigkeit wurde die Zeit bis zur Durchhärtung der Zusammensetzung herangezogen. Die Zeit bis zur **Durchhärtung** wurde bestimmt, indem die Zusammensetzung als Film in einer Schichtdicke von 5 mm in eine PTFE-Form gegossen, diese im Normklima gelagert und durch periodisches Anheben des Filmrands die Zeit in Tagen bestimmt wurde, die es dauerte, bis der Film sich erstmals rückstandsfrei von der Form ablösen liess.

Die Ergebnisse der Prüfungen sind in der Tabelle 2 aufgeführt.

**Tabelle 2: Eigenschaften der Beispiele 1 bis 5 und Vergleichsbeispiele 6 bis 8.**

| Beispiel | **1** | **2** | **3** | **4** | **5** | **6 (Vgl)** | **7 (Vgl)** | **8 (Vgl)** |
|---|---|---|---|---|---|---|---|---|
| Viskosität nach 12 h^{a} | 22.8 | 27.1 | 21.7 | 19.7 | 23.8 | 22.4 | 23.1 | 20.5 |
| Viskosität nach 7 d^{a} | 27.0 | 30.6 | 25.0 | 23.2 | 26.4 | 26.2 | 27.7 | 25.2 |
| Viskositätszunahme^{b} | 18% | 13% | 15% | 18% | 11% | 17% | 20% | 23% |
| Hautbildungszeit (min) | 70 | 150 | 90 | 65 | 60 | 40 | 45 | 45 |
| Durchhärtung (d) | 2.5 | 3 | 3 | 3 | 2.5 | 2.5 | 2.5 | 2.5 |

| | | | | | | | | |
|---|---|---|---|---|---|---|---|---|
| ^{a}in Pa·s, Lagerung bei 60°C.^{b}=(Viskosität nach 7 d / Viskosität nach 12 h - 1)x100%. | | | | | | | | |

### Beispiele 9 bis 10 und Vergleichsbeispiel 11

Für jedes Beispiel wurden die jeweiligen Bestandteile gemäss Tabelle 3 in den angegebenen Gewichtsteilen ohne vorherige Trocknung in einen Polypropylenbecher mit Schraubverschluss eingewogen und mittels eines Zentrifugalmischers (SpeedMixer™ DAC 150, FlackTek Inc.; 1 min. bei 2500 U/min) gemischt, die Mischung sofort in eine innenlackierte Aluminiumtube abgefüllt und diese luftdicht verschlossen.

Das Polyurethanpolymer ***PUP-2*** wurde wie folgt hergestellt:
180 g Polyoxypropylen-Diol (Acclaim® 4200 N, Bayer; OH-Zahl 28.5 mg KOH/g), 50 g Polyoxypropylen-Triol (Acclaim® 6300, Bayer; OH-Zahl 28.0 mg KOH/g) und 21 g Toluylendiisocyanat (TDI; Desmodur® T 80 P, Bayer) wurden bei 80 °C zu einem NCO-terminierten Polyurethanpolymeren mit einem Gehalt an freien Isocyanat-Gruppen von 1.89 Gewichts-% und einer Viskosität von 13.8 Pa·s bei 20 °C umgesetzt.

Das Verhältnis zwischen den Isocyanatgruppen und den Aldiminogruppen beträgt für alle Beispiele 1.0/0.70.

**Tabelle 3: Zusammensetzung der Beispiele 9 bis 10 und des Vergleichsbeispiels 11.**

| Beispiel | **9** | **10** | **11 (Vergleich)** |
|---|---|---|---|
| Polyurethanpolymer ***PUP-2*** | 50.0 | 50.0 | 50.0 |
| Dialdimin | ***A-1***, 5.77 | ***A-2***, 5.23 | ***A-8***, 6.31 |
| Säurekatalysator^{a} | 0.1 | 0.1 | 0.1 |

| | | | |
|---|---|---|---|
| ^{a}Salicylsäure (5 Gew.-% in Dioctyladipat). | | | |

Die so erhaltenen Zusammensetzungen wurden auf Lagerstabilität, Offenzeit (Hautbildungszeit) und Aushärtungsgeschwindigkeit (Durchhärtung) geprüft wie im Beispiel 1 beschrieben.

Die Ergebnisse der Prüfungen sind in der Tabelle 4 aufgeführt.

**Tabelle 4: Eigenschaften der Beispiele 9, 10 und des Vergleichsbeispiels 11.**

| Beispiel | **9** | **10** | **11 (Vergleich)** |
|---|---|---|---|
| Viskosität nach 12 h (Pa·s)^{a} | 12.8 | 13.0 | 12.0 |
| Viskosität nach 7 d (Pa·s)^{a} | 15.6 | 15.6 | 14.0 |
| Viskositätszunahme^{b} | 22% | 20% | 17% |
| Hautbildungszeit (min) | 130 | 295 | 70 |
| Durchhärtung (d) | 4 | 3.5 | 3 |

| | | | |
|---|---|---|---|
| ^{a}Lagerung bei 60 °C. ^{b} = (Viskosität nach 7 d / Viskosität nach 12 h - 1) × 100%. | | | |

### Beispiele 12 bis 15 und Vergleichsbeispiele 16 bis 18:

### Einkomponentige elastische Klebstoffe

Für jedes Beispiel wurden die jeweiligen Bestandteile gemäss Tabelle 5 in den angegebenen Gewichtsteilen ohne vorherige Trocknung in einem Vakuummischer unter Feuchtigkeitsausschluss zu einer homogenen Paste verarbeitet, diese unverzüglich in eine innenlackierte Aluminium-Kartusche abgefüllt und die Kartusche luftdicht verschlossen.

Das Polyurethanpolymer ***PUP-3*** wurde wie folgt hergestellt:
3560 g Polyoxypropylen-Diol (Acclaim® 4200 N, Bayer; OH-Zahl 28.1 mg KOH/g), 1000 g Polyoxypropylen-Triol (Acclaim® 6300, Bayer; OH-Zahl 28.0 mg KOH/g) und 440 g Toluylendiisocyanat (TDI; Desmodur® T 80 P, Bayer) wurden bei 80 °C zu einem NCO-terminierten Polyurethanpolymeren mit einem titrimetrisch bestimmten Gehalt an freien Isocyanat-Gruppen von 2.19 Gewichts-% und einer Viskosität bei 20 °C von 10 Pa·s umgesetzt.

Das Verdickungsmittel wurde wie folgt hergestellt:
In einem Vakuummischer wurden 3000 g Diisodecylphthalat (DIDP; Palatinol® Z, BASF) und 480 g 4,4'-Methylendiphenyldiisocyanat (MDI; Desmodur® 44 MC L, Bayer) vorgelegt und leicht aufgewärmt. Dann wurden unter starkem Rühren 270 g Monobutylamin langsam zugetropft. Die entstehende Paste wurde unter Vakuum und Kühlung eine Stunde weitergerührt.

Das Verhältnis zwischen den Isocyanatgruppen und den Aldiminogruppen beträgt für alle Beispiele 1.0/0.67.

**Tabelle 5: Zusammensetzung der einkomponentigen elastischen Klebstoffe der Beispiele 12 bis 15 und der Vergleichsbeispiele 16 bis 18.**

| Beispiel | **12** | **13** | **14** | **15** | **16 (Vgl)** | **17 (Vgl)** | **18 (Vgl)** |
|---|---|---|---|---|---|---|---|
| PUR-Polymer ***PUP-3*** | 24.0 | 24.0 | 24.0 | 24.0 | 24.0 | 24.0 | 24.0 |
| Dialdimin | ***A-1***, 3.07 | ***A-2***, 2.78 | ***A-3***, 3.18 | ***A-4***, 3.15 | ***A-6***, 2.85 | ***A-7***, 3.27 | ***A-8***, 3.36 |
| Weichmacher^{a} | 1.93 | 2.22 | 1.82 | 1.85 | 3.15 | 1.73 | 1.64 |
| Kreide | 38.0 | 38.0 | 38.0 | 38.0 | 38.0 | 38.0 | 38.0 |
| Verdickungsmittel | 28.0 | 28.0 | 28.0 | 28.0 | 28.0 | 28.0 | 28.0 |
| Titandioxid | 4.5 | 4.5 | 4.5 | 4.5 | 4.5 | 4.5 | 4.5 |
| Epoxysilan^{b} | 0.2 | 0.2 | 0.2 | 0.2 | 0.2 | 0.2 | 0.2 |
| Säurekatalysator^{c} | 0.3 | 0.3 | 0.3 | 0.3 | 0.3 | 0.3 | 0.3 |

| | | | | | | | |
|---|---|---|---|---|---|---|---|
| ^{a} Diisodecylphthalat (DIDP; Palatinol® Z, BASF). ^{b} 3-Glycidoxypropyltriethoxysilan (Dynasylan® GLYEO, Degussa). ^{c} Salicylsäure (5 Gew.-% in Dioctyladipat). | | | | | | | |

Die so erhaltenen einkomponentigen elastischen Klebstoffe wurden auf Applikationseigenschaften, Offenzeit, Aushärtungsgeschwindigkeit und mechanische Eigenschaften nach der Aushärtung geprüft.

Als Mass für die Applikationseigenschaften wurden die Standfestigkeit und der Fadenzug herangezogen. Zur Bestimmung der **Standfestigkeit** wurde der Klebstoff mittels Kartuschenpistole über eine Dreiecksdüse als waagrecht verlaufende Dreiecksraupe mit einem Basisdurchmesser von 8 mm und einer Höhe (Abstand der Dreiecksspitze von der Basis) von 20 mm auf ein senkrecht stehendes Stück Pappkarton aufgetragen. Nach 5 Minuten wurde gemessen, wie weit sich die Spitze abgesenkt, d.h. von der ursprünglichen Position in der Mitte der Dreiecksraupe wegbewegt, hatte. Als "sehr gut" wurde bewertet, wenn sich die Spitze in vollständig oder annährend unveränderter Position befand, als "gut", wenn die Spitze sich zwischen Mitte und Basisende befand. Der **Fadenzug** wurde qualitativ bestimmt, indem etwas Klebstoff mittels Kartuschenpistole auf ein an der Wand befestigtes Stück Pappkarton aufgetragen wurde, die Kartuschenpistole beim Auftragsende durch rasches Zurückziehen vom aufgetragenen Klebstoff weggezogen und die Länge des dabei an der Abrissstelle zurückbleibenden Fadens gemessen wurde.

Als Mass für die Offenzeit wurde die Hautbildungszeit (Zeit bis zur Klebefreiheit, "tack-free time") herangezogen. Die **Hautbildungszeit** wurde wie bei Beispiel 1 beschrieben bestimmt.

Als Mass für die Aushärtungsgeschwindigkeit wurde die Zeit bis zur Durchhärtung des Klebstoffs herangezogen. Die Zeit bis zur **Durchhärtung** wurde untersucht, indem der Klebstoff mittels Kartuschenpistole durch eine Rundspitze (Öffnung 10 mm) als waagrechter, frei hängender Konus mit einer Länge von ca. 50 mm und einer Dicke in der Mitte von 30 mm auf ein an der Wand befestigtes Stück Pappkarton aufgetragen wurde, während 7 Tagen im Normklima belassen, dann vertikal mittig aufgeschnitten und die Dicke der ausgehärteten Klebstoff-Schicht mit einem Massstab gemessen wurde.

Zur Bestimmung der mechanischen Eigenschaften nach der Aushärtung wurden die Shore A-Härte, die Zugfestigkeit, Bruchdehnung und die Dehnspannung bei 100% gemessen. Die **Shore A-Härte** wurde bestimmt nach DIN 53505 an während 14 Tagen im Normklima ausgehärteten Prüfkörpern. Zur Prüfung der weiteren mechanischen Eigenschaften wurde der Klebstoff 2 Stunden nach der Herstellung mittels einer Presse zu einem Film von ca. 2 mm Dicke gepresst, der Film während 14 Tagen im Normklima ausgehärtet und nach DIN EN 53504 auf **Zugfestigkeit, Bruchdehnung** und **Dehnspannung bei 100%** (Zuggeschwindigkeit: 200 mm/min) geprüft.

Alle Klebstoffe härteten vollständig blasenfrei aus.

Die Ergebnisse der Prüfungen sind in der Tabelle 6 aufgeführt.

**Tabelle 6: Eigenschaften der elastischen Klebstoffe der Beispiele 12 bis 15 und der Vergleichsbeispiele 16 bis 18.**

| Beispiel | **12** | **13** | **14** | **15** | **16 (Vgl)** | **17 (Vgl)** | **18 (Vgl)** |
|---|---|---|---|---|---|---|---|
| Standfestigkeit | sehrgut | sehr gut | sehr gut | sehr gut | sehr gut | sehr gut | gut |
| Fadenzug (cm) | 10 | 8 | 4 | 5 | 10 | 4 | 4 |
| Hautbildungszeit (min) | 105 | 280 | 180 | 100 | 55 | 60 | 65 |
| Durchhärtung (mm) | 9 | 8 | 8 | 8 | 11 | 10 | 4 |
| Shore A-Härte | 38 | 42 | 34 | 31 | 39 | 37 | 31 |
| Zugfestigkeit (MPa) | 2.1 | 2.1 | 1.4 | 1.7 | 2.1 | 1.9 | 1.8 |
| Bruchdehnung (%) | 1350 | 1070 | 1010 | 1040 | 1140 | 1310 | 1040 |
| Dehnspannung bei 100% (MPa) | 1.00 | 1.46 | 0.93 | 1.01 | 1.39 | 1.04 | 1.44 |

### Beispiel 19 und Vergleichsbeispiele 20 bis 21:

### Einkomponentige elastische Dichtstoffe

Für jedes Beispiel wurden die jeweiligen Bestandteile gemäss Tabelle 7 in den angegebenen Gewichtsteilen ohne vorherige Trocknung in einem Vakuummischer unter Feuchtigkeitsausschluss zu einer homogenen Paste verarbeitet, diese unverzüglich in eine innenlackierte Aluminium-Kartusche abgefüllt und die Kartusche luftdicht verschlossen.

Das Polyurethanpolymer ***PUP-4*** wurde wie folgt hergestellt:
1190 g Polyoxypropylen-Diol (Acclaim® 4200 N, Bayer; OH-Zahl 28.1 mg KOH/g), 620 g Polyoxypropylenpolyoxyethylen-Triol (Caradol® MD34-02, Shell; OH-Zahl 35.0 mg KOH/g) und 190 g 2,4-Toluylendiisocyanat (Scuranate® T-100, Lyondell) wurden bei 80 °C zu einem NCO-terminierten Polyurethanpolymeren mit einem titrimetrisch bestimmten Gehalt an freien Isocyanat-Gruppen von 2.32 Gewichts-% und einer Viskosität bei 20 °C von 5 Pa·s umgesetzt. Das Verdickungsmittel wurde wie in Beispiel 12 beschrieben hergestellt.

Das Verhältnis zwischen den Isocyanatgruppen und den Aldiminogruppen beträgt für alle Beispiele 1.0/0.67.

**Tabelle 7: Zusammensetzung der einkomponentigen elastischen Dichtstoffe des Beispiels 19 und der Vergleichsbeispiele 20 bis 21.**

| Beispiel | **19** | **20 (Vergleich)** | **21 (Vergleich)** |
|---|---|---|---|
| Polyurethanpolymer ***PUP-4*** | 24.0 | 24.0 | 24.0 |
| Dialdimin | ***A-1***, 3.26 | ***A-7***, 3.47 | ***A-8***, 3.56 |
| Weichmacher^{a} | 1.74 | 1.53 | 1.44 |
| Kreide | 38.0 | 38.0 | 38.0 |
| Verdickungsmittel | 28.0 | 28.0 | 28.0 |
| Titandioxid | 4.5 | 4.5 | 4.5 |
| Epoxysilan^{b} | 0.2 | 0.2 | 0.2 |
| Säurekatalysator^{c} | 0.3 | 0.3 | 0.3 |

| | | | |
|---|---|---|---|
| ^{a}Diisodecylphthalat (DIDP; Palatinol® Z, BASF). ^{b} 3-Glycidoxypropyltriethoxysilan (Dynasylan® GLYEO, Degussa). ^{c} Salicylsäure (5 Gew.-% in Dioctyladipat). | | | |

Die so erhaltenen einkomponentigen elastischen Dichtstoffe wurden auf Applikationseigenschaften (Standfestigkeit, Fadenzug), Offenzeit (Hautbildungszeit), Aushärtungsgeschwindigkeit (Durchhärtung) und mechanische Eigenschaften nach der Aushärtung (Shore A-Härte, Zugfestigkeit, Bruchdehnung, Dehnspannung bei 100%) geprüft wie für Beispiel 12 beschrieben.

Weiterhin wurden die Dichtstoffe qualitativ auf **Klebrigkeit** geprüft. Dies erfolgte dadurch, dass man mit dem Daumen auf den aushärtenden Shore A-Prüfkörper, ein bzw. 3 Tage nach dessen Applikation, drückte und danach feststellte, wie lange der Prüfkörper beim Anheben der Hand am Daumen kleben blieb. Die Klebrigkeit wurde darauf als hoch (Prüfkörper bleibt mehr als 3 Sekunden lang kleben), mittel (Prüfkörper bleibt etwa 3 Sekunden lang kleben), gering (Prüfkörper bleibt 1 bis 2 Sekunden lang kleben) und keine (Prüfkörper bleibt weniger als 1 Sekunde lang kleben) bewertet.

Alle Dichtstoffe härteten vollständig blasenfrei aus.

Die Ergebnisse der Prüfungen sind in der Tabelle 8 aufgeführt.

**Tabelle 8: Eigenschaften der einkomponentigen elastischen Dichtstoffe des Beispiels 19 und der Vergleichsbeispiele 20 bis 21.**

| Beispiel | **19** | **20 (Vergleich)** | **21 (Vergleich)** |
|---|---|---|---|
| Standfestigkeit | sehr gut | sehr gut | sehr gut |
| Fadenzug (cm) | 5 | 4 | 8 |
| Hautbildungszeit (min) | 250 | 95 | 70 |
| Durchhärtung (mm) | 8 | 7 | 3 |
| Shore A-Härte | 30 | 32 | 23 |
| Zugfestigkeit (MPa) | 2.0 | 2.0 | 1.4 |
| Bruchdehnung (%) | 1180 | 1150 | 1200 |
| Dehnspannung bei 100% (MPa) | 0.35 | 0.42 | 0.34 |
| Klebrigkeit nach 1 Tag | gering | gering | hoch |
| Klebrigkeit nach 3 Tagen | keine | keine | mittel |

### Beispiele 22 bis 23 und Vergleichsbeispiel 24:

### Zweikomponentige elastische Klebstoffe

Für jedes Beispiel wurde die Komponente **K1** wie folgt hergestellt:
In einem Planetenmischer wurden unter Stickstoffatmosphäre 200 g teilweise carbodiimidisiertes 4,4'-Methylendiphenyldiisocyanat (Desmodur® CD, Bayer; NCO-Gehalt = 29.5 Gew.-%) mit 280 g Polyurethanpolymer ***PUP-1*** und 20 g hydrophober pyrogener Kieselsäure (Aerosil® R972, Degussa) zu einer homogenen Paste vermischt und in Kartuschen abgefüllt.

Anschliessend wurde die Komponente **K2** gemäss Tabelle 9 in den angegebenen Gewichtsteilen ohne vorherige Trocknung in einer Polypropylenkartusche eingewogen und mittels eines Zentrifugalmischers (SpeedMixer™ DAC 150, FlackTek Inc.; 2 min. bei 3000 U/min) zu einer homogenen Paste gemischt. Dazu wurden die in Tabelle 9 angegebenen Gewichtsteile der Komponente **K1** zugegeben und sofort eingemischt (30 sec. bei 3000 U/min). Das Polyurethanpolymer ***PUP-1*** wurde wie in Beispiel 1 beschrieben hergestellt. Das Verdickungsmittel wurde wie in Beispiel 12 beschrieben hergestellt.

Das Verhältnis zwischen den Isocyanatgruppen der Komponente **K1** und der Summe der Reaktivgruppen (Hydroxylgruppen, primäre Aminogruppen und Aldiminogruppen) der Komponente **K2** beträgt stets 0.91/1. Das Verhältnis zwischen dem Wasser und den Aldiminogruppen in der Komponente **K2** beträgt stets 0.6/1.

**Tabelle 9: Zusammensetzung der zweikomponentigen elastischen Klebstoffe der Beispiele 22 bis 23 und des Vergleichsbeispiels 24.**

| Beispiel | **22** | **23** | **24 (Vergleich)** |
|---|---|---|---|
| **Komponente K1** | 18.2 | 18.7 | 18.4 |
| **Komponente K2:** | | | |
| Polyol^{a} | 47.0 | 47.0 | 47.0 |
| Dialdimin | ***A-1*** | ***A-2*** | ***A-9*** |
| | 4.7 | 4.7 | 4.7 |
| Diamin^{b} | 1.0 | 1.0 | 1.0 |
| Verdickungsmittel | 10.0 | 10.0 | 10.0 |
| Aminkatalysator^{c} | 0.1 | 0.1 | 0.1 |
| Säurekatalysator^{d} | 0.2 | 0.2 | 0.2 |
| Wasser | 0.139 | 0.153 | 0.145 |
| Molekularsiebe^{e} | 2.0 | 2.0 | 2.0 |
| Kreide | 35.0 | 35.0 | 35.0 |

| | | | |
|---|---|---|---|
| ^{a} low monol Polyoxypropylenpolyoxyethylen-Diol (Preminol® S-X5006, Asahi Glass; OH-Zahl 28.0 mg KOH/g). ^{b} 1,3-Xylylendiamin. ^{c} DABCO® 33-LV, Air Products. ^{d} Salicylsäure (5 Gew.-% in Dioctyladipat). ^{e} Molekularsieb 8Å (Purmol® 13, Zeochem Europe). | | | |

Die so erhaltenen zweikomponentigen elastischen Klebstoffe wurden unmittelbar nach dem Mischen der beiden Komponenten appliziert und auf Offenzeit, Aushärtungsgeschwindigkeit sowie mechanische Eigenschaften nach der Aushärtung geprüft.

Als Mass für die Offenzeit wurde die **Zeit bis zur Klebefreiheit** des Klebstoffs herangezogen. Diese Prüfung erfolgte analog der Bestimmung der Hautbildungszeit wie für Beispiel 1 beschrieben.

Als Mass für die Aushärtungsgeschwindigkeit wurde die Aushärtungszeit herangezogen. Zur Bestimmung der **Aushärtungszeit** wurde am aushärtenden Klebstoff in regelmässigen Abständen die Shore A-Härte (gemessen nach DIN 53505) gemessen und der Klebstoff als vollständig ausgehärtet gewertet, sobald der Wert für die Shore A-Härte praktisch konstant blieb.

Zur Bestimmung der mechanischen Eigenschaften nach der Aushärtung wurden die Shore A-Härte, die Zugfestigkeit, die Bruchdehnung und das E-Modul gemessen. Die **Shore A-Härte** wurde bestimmt nach DIN 53505 an während 4 Tagen im Normklima ausgehärteten Prüfkörpern. Zur Prüfung der weiteren mechanischen Eigenschaften wurde der Klebstoff unmittelbar nach der Herstellung mittels einer Presse zu einem Film von ca. 2 mm Dicke gepresst, der Film während 4 Tagen im Normklima ausgehärtet und nach DIN EN 53504 auf **Zugfestigkeit, Bruchdehnung** und **E-Modul** (Zuggeschwindigkeit: 200 mm/min) geprüft.

Alle Klebstoffe härteten vollständig blasenfrei aus.

Die Ergebnisse der Prüfungen sind in der Tabelle 10 aufgeführt.

**Tabelle 10: Eigenschaften der zweikomponentigen elastischen Klebstoffe der Beispiele 22 bis 23 und des Vergleichsbeispiels 24.**

| Beispiel | **22** | **23** | **24 (Vergleich)** |
|---|---|---|---|
| Zeit bis zur Klebefreiheit (min) | 120 | 105 | 45 |
| Aushärtungszeit (h) | 12 | 11 | 9 |
| Shore A-Härte | 47 | 46 | 49 |
| Zugfestigkeit (MPa) | 2.4 | 2.0 | 2.3 |
| Bruchdehnung (%) | 600 | 600 | 610 |
| E-Modul bei 0.5-5% Dehnung (MPa) | 2.4 | 2.1 | 2.3 |

Aus den Beispielen ist ersichtlich, dass die erfindungsgemässen Zusammensetzungen bei vergleichbarer Aushärtungsgeschwindigkeit eine deutlich längere Offenzeit aufweisen als die Zusammensetzungen der Vergleichsbeispiele. In den jeweils bestimmten weiteren Eigenschaften wie der Lagerstabilität, den Applikationseigenschaften, den mechanischen Eigenschaften nach der Aushärtung oder der Klebrigkeit zeigen sich hingegen keine signifikanten Unterschiede zwischen den erfindungsgemässen Zusammensetzungen und den Zusammensetzungen der Vergleichsbeispiele.

## Patentansprüche

1. Zusammensetzung, umfassend
a) mindestens ein aromatische Isocyanatgruppen aufweisendes Polyisocyanat **P,** und
b) mindestens ein Dialdimin **A** der Formel (I), 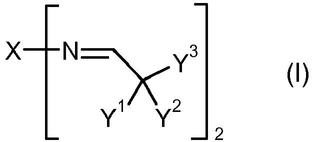
wobei X für den Rest eines Diamins **DA** mit zwei primären Aminogruppen nach der Entfernung dieser zwei Aminogruppen steht; und
Y¹ und Y² entweder
unabhängig voneinander jeweils für einen einwertigen Kohlenwasserstoffrest mit 1 bis 12 C-Atomen stehen,
oder zusammen für einen zweiwertigen Kohlenwasserstoffrest mit 4 bis 20 C-Atomen, der Teil eines, gegebenenfalls substituierten, carbocyclischen Rings mit 5 bis 8, bevorzugt 6, C-Atomen ist, stehen; und
Y³ für einen einwertigen Kohlenwasserstoffrest, welcher gegebenenfalls mindestens ein Heteroatom, insbesondere Sauerstoff in Form von Ether-, Carbonyl- oder Ester-Gruppen, aufweist, steht;
mit der Massgabe, dass mindestens eine der beiden primären Aminogruppen des Diamins **DA** eine aliphatische Aminogruppe ist, und die zwei primären Aminogruppen des Diamins **DA** sich entweder
in der Anzahl der Wasserstoffatome an den in α-Stellung zur jeweiligen Aminogruppe stehenden Kohlenstoffatomen (C_{α}) um mindestens eins
oder
in der Anzahl der Wasserstoffatome an den in β-Stellung zur jeweiligen Aminogruppe stehenden Kohlenstoffatomen (C_{β}) um mindestens zwei
voneinander unterscheiden.

2. Zusammensetzung gemäss Anspruch 1, **dadurch gekennzeichnet, dass** das Diamin **DA** ausgewählt ist aus der Gruppe bestehend aus 1,2-Propandiamin, 2-Methyl-1,2-propandiamin, 1,3-Butandiamin, 1,3-Diaminopentan (DAMP), 4-Aminoethylanilin, 4-Aminomethylanilin, 4-[(4-Aminocyclohexyl)methyl]anilin, 2-Aminoethylanilin, 2-Aminomethylanilin, 2-[(4-Aminocyclohexyl)methyl]anilin, 4-[(2-Aminocyclohexyl)methyl]anilin; 2,2,4-Trimethylhexamethylendiamin (TMD), 1,5-Diamino-2-butyl-2-ethyl-pentan, 1-Amino-3-aminomethyl-3,5,5-trimethylcyclohexan (= Isophorondiamin = IPDA) und 1,4-Diamino-2,2,6-trimethylcyclohexan (TMCDA).

3. Zusammensetzung gemäss Anspruch 1 oder 2, **dadurch gekennzeichnet, dass** das aromatische Isocyanatgruppen aufweisende Polyisocyanat **P** ein aromatische Isocyanatgruppen aufweisendes Polyurethanpolymer **PUP,** insbesondere erhältlich aus der Umsetzung von mindestens einem Polyol mit mindestens einem aromatischen Polyisocyanat, ist.

4. Zusammensetzung gemäss Anspruch 3, **dadurch gekennzeichnet, dass** das für die Herstellung des aromatische Isocyanatgruppen aufweisenden Polyurethanpolymers **PUP** verwendete Polyisocyanat ein aromatisches Polyisocyanat ist, welches ausgewählt ist aus der Gruppe bestehend aus 2,4- und 2,6-Toluylendiisocyanat und beliebigen Gemischen dieser Isomeren (TDI), 4,4'-, 2,4'- und 2,2'-Diphenylmethandiisocyanat und beliebigen Gemischen dieser Isomeren (MDI), Gemischen aus MDI und MDI-Homologen (polymeres MDI oder PMDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI), Dianisidindiisocyanat (DADI), Oligomeren und Polymeren der vorgenannten Isocyanate, sowie beliebigen Mischungen der vorgenannten Isocyanate.

5. Zusammensetzung gemäss Anspruch 1 oder 2, **dadurch gekennzeichnet, dass** das aromatische Isocyanatgruppen aufweisende Polyisocyanat **P** ein aromatisches Polyisocyanat **PI** ist, welches ausgewählt ist aus der Gruppe bestehend aus 2,4- und 2,6-Toluylendiisocyanat und beliebigen Gemischen dieser Isomeren (TDI), 4,4'-, 2,4'- und 2,2'-Diphenylmethandiisocyanat und beliebigen Gemischen dieser Isomeren (MDI), Gemischen aus MDI und MDI-Homologen (polymeres MDI oder PMDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI), Dianisidindiisocyanat (DADI), Oligomeren und Polymeren der vorgenannten Isocyanate, sowie beliebigen Mischungen der vorgenannten Isocyanate.

6. Zusammensetzung gemäss einem der vorhergehenden Ansprüche, **dadurch gekennzeichnet, dass** Y³ für einen Rest der Formel (II) oder (III), bevorzugt für einen Rest der Formel (III), steht, 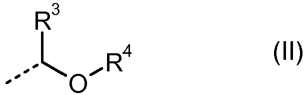 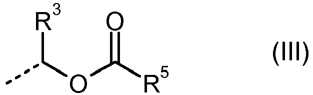
wobei R³ für ein Wasserstoffatom oder für eine Alkyl- oder Arylalkylgruppe, insbesondere mit 1 bis 12 C-Atomen, bevorzugt für ein Wasserstoffatom, steht;
R⁴ für einen Kohlenwasserstoffrest mit 1 bis 30, insbesondere 11 bis 30, C-Atomen, der gegebenenfalls Heteroatome enthält, steht; und
R⁵ entweder
für ein Wasserstoffatom steht,
oder
für einen linearen oder verzweigten Alkylrest mit 1 bis 30, insbesondere 11 bis 30, C-Atomen, gegebenenfalls mit cyclischen Anteilen und gegebenenfalls mit mindestens einem Heteroatom, steht,
oder
für einen einfach oder mehrfach ungesättigten, linearen oder verzweigten Kohlenwasserstoffrest mit 5 bis 30 C-Atomen steht,
oder
für einen, gegebenenfalls substituierten, aromatischen oder heteroaromatischen 5- oder 6-gliedrigen Ring steht.

7. Zusammensetzung gemäss einem der vorher gehenden Ansprüche, **dadurch gekennzeichnet, dass** die Zusammensetzung einkomponentig ist.

8. Zusammensetzung gemäss einem der Ansprüche 1 bis 6, **dadurch gekennzeichnet, dass** die Zusammensetzung zweikomponentig ist und aus einer Komponente **K1** und einer Komponente **K2** besteht.

9. Zusammensetzung gemäss Anspruch 8, **dadurch gekennzeichnet, dass** das aromatische Isocyanatgruppen aufweisende Polyisocyanat **P** und das Dialdimin **A** der Formel (I) Teil der Komponente **K1** ist und
die Komponente **K2** gegenüber Isocyanatgruppen reaktive Verbindungen, insbesondere Wasser und/oder Polyole und/oder Polyamine, enthält.

10. Zusammensetzung gemäss Anspruch 8, **dadurch gekennzeichnet, dass** das aromatische Isocyanatgruppen aufweisende Polyisocyanat **P** Teil der Komponente **K1** ist und
die Komponente **K2** das Dialdimin **A** der Formel (I), sowie gegenüber Isocyanatgruppen reaktive Verbindungen, insbesondere Wasser und/oder Polyole und/oder Polyamine, enthält.

11. Ausgehärtete Zusammensetzung, welche durch die Reaktion einer Zusammensetzung gemäss einem der Ansprüche 1 bis 7 mit Wasser, insbesondere in Form von Luftfeuchtigkeit, erhalten wird.

12. Ausgehärtete Zusammensetzung, welche durch die Vermischung der zwei Komponenten **K1** und **K2** einer Zusammensetzung gemäss einem der Ansprüche 8 bis 10, gegebenenfalls gefolgt von einer Reaktion mit Wasser, erhalten wird.

13. Verwendung einer Zusammensetzung gemäss einem der Ansprüche 1 bis 10 als Klebstoff, Dichtstoff, Vergussmasse oder Beschichtung.

14. Verwendung einer Zusammensetzung gemäss einem der Ansprüche 1 bis 10 zum Abdichten von Fugen, insbesondere von Fugen eines Bauwerks des Hoch- oder Tiefbaus.

15. Verfahren zum Verkleben von einem Substrat **S1** mit einem Substrat **S2,** umfassend die Schritte
i) Applikation einer Zusammensetzung gemäss einem der Ansprüche 1 bis 10 auf ein Substrat **S1;**
ii) Kontaktieren der applizierten Zusammensetzung mit einem Substrat **S2** innerhalb der Offenzeit der Zusammensetzung;
oder
i') Applikation einer Zusammensetzung gemäss einem der Ansprüche 1 bis 10 auf ein Substrat **S1** und auf ein Substrat **S2;**
ii') Kontaktieren der applizierten Zusammensetzung miteinander innerhalb der Offenzeit der Zusammensetzung;
wobei das Substrat **S2** aus dem gleichen oder einem unterschiedlichen Material wie das Substrat **S1** besteht.

16. Verfahren zum Abdichten, umfassend den Schritt
i") Applikation einer Zusammensetzung gemäss einem der Ansprüche 1 bis 10 zwischen ein Substrat **S1** und ein Substrat **S2,** so dass die Zusammensetzung mit dem Substrat **S1** und dem Substrat **S2** in Kontakt steht;
wobei das Substrat **S2** aus dem gleichen oder einem unterschiedlichen Material wie das Substrat **S1** besteht.

17. Verfahren zum Beschichten eines Substrates **S1,** umfassend den Schritt
i''') Applikation einer Zusammensetzung gemäss einem der Ansprüche 1 bis 10 auf ein Substrat **S1** innerhalb der Offenzeit der Zusammensetzung.

18. Artikel, welcher nach einem Verfahren gemäss einem der Ansprüche 15 bis 17 verklebt, abgedichtet oder beschichtet wurde.

## Claims

1. Composition comprising
a) at least one polyisocyanate **P** having aromatic isocyanate groups, and
b) at least one dialdimine **A** of the formula (I), 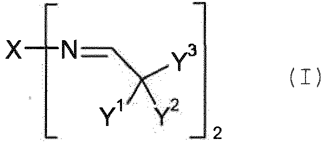
where X is the radical of a diamine **DA** with two primary amino groups after the removal of these two amino groups; and
Y¹ and Y² are either
each independently a monovalent hydrocarbon radical having 1 to 12 carbon atoms,
or together are a divalent hydrocarbon radical which has 4 to 20 carbon atoms and is part of an optionally substituted carbocyclic ring having 5 to 8, preferably 6, carbon atoms; and
Y³ is a monovalent hydrocarbon radical which optionally has at least one heteroatom, especially oxygen in the form of ether, carbonyl or ester groups;
with the proviso that at least one of the two primary amino groups of the diamine **DA** is an aliphatic amino group, and the two primary amino groups of the diamine **DA** differ from one another either
in the number of hydrogen atoms on the carbon atoms (C_{α}) in the α position to the particular amino group by at least one
or
in the number of hydrogen atoms on the carbon atoms (C_{β}) in the β position to the particular amino group by at least two.

2. Composition according to Claim 1, **characterized in that** the diamine **DA** is selected from the group consisting of 1,2-propanediamine, 2-methyl-1,2-propanediamine, 1,3-butanediamine, 1,3-diaminopentane (DAMP), 4-aminoethylaniline, 4-aminomethylaniline, 4-[(4-aminocyclohexyl)methyl]aniline, 2-aminoethylaniline, 2-aminomethylaniline, 2-[(4-aminocyclohexyl)methyl]aniline, 4-[(2-aminocyclohexyl)methyl]aniline; 2,2,4-trimethylhexamethylenediamine (TMD), 1,5-diamino-2-butyl-2-ethyl-pentane, 1-amino-3-aminomethyl-3,5,5-trimethylcyclohexane (= isophoronediamine = IPDA) and 1,4-diamino-2,2,6-trimethylcyclohexane (TMCDA).

3. Composition according to Claim 1 or 2, **characterized in that** the polyisocyanate **P** having aromatic isocyanate groups is a polyurethane polymer **PUP** having aromatic isocyanate groups, especially obtainable from the reaction of at least one polyol with at least one aromatic polyisocyanate.

4. Composition according to Claim 3, **characterized in that** the polyisocyanate used for the preparation of the polyurethane polymer **PUP** having aromatic isocyanate groups is an aromatic polyisocyanate which is selected from the group consisting of 2,4- and 2,6-tolylene diisocyanate and any desired mixtures of these isomers (TDI), 4,4'-, 2,4'- and 2,2'-diphenylmethane diisocyanate and any desired mixtures of these isomers (MDI), mixtures of MDI and MDI homologs (polymeric MDI or PMDI), 1,3- and 1,4-phenylene diisocyanate, 2,3,5,6-tetramethyl-1,4-diisocyanatobenzene, naphthalene 1,5-diisocyanate (NDI), 3,3'-dimethyl-4,4'-diisocyanatodiphenyl (TODI), dianisidine diisocyanate (DADI), oligomers and polymers of the aforementioned isocyanates, and any desired mixtures of the aforementioned isocyanates.

5. Composition according to Claim 1 or 2, **characterized in that** the polyisocyanate **P** having aromatic isocyanate groups is an aromatic polyisocyanate **PI** which is selected from the group consisting of 2,4- and 2,6-tolylene diisocyanate and any desired mixtures of these isomers (TDI), 4,4'-, 2,4'- and 2,2'-diphenylmethane diisocyanate and any desired mixtures of these isomers (MDI), mixtures of MDI and MDI homologs (polymeric MDI or PMDI), 1,3- and 1,4-phenylene diisocyanate, 2,3,5,6-tetramethyl-1,4-diisocyanatobenzene, naphthalene 1,5-diisocyanate (NDI), 3,3'-dimethyl-4,4'-diisocyanatodiphenyl (TODI), dianisidine diisocyanate (DADI), oligomers and polymers of the aforementioned isocyanates, and any desired mixtures of the aforementioned isocyanates.

6. Composition according to any one of the preceding claims, **characterized in that** Y³ is a radical of the formula (II) or (III), preferably a radical of the formula (III), 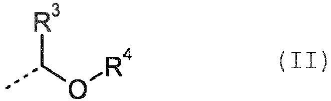 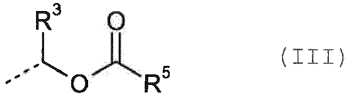
where R³ is a hydrogen atom or an alkyl or arylalkyl group, especially having 1 to 12 carbon atoms, preferably a hydrogen atom;
R⁴ is a hydrocarbon radical having 1 to 30, especially 11 to 30, carbon atoms, which optionally contains heteroatoms; and
R⁵
is a hydrogen atom
or
is a linear or branched alkyl radical having 1 to 30, especially 11 to 30, carbon atoms, optionally with cyclic components and optionally with at least one heteroatom,
or
is a mono- or polyunsaturated, linear or branched hydrocarbon radical having 5 to 30 carbon atoms,
or
is an optionally substituted aromatic or heteroaromatic 5- or 6-membered ring.

7. Composition according to any one of the preceding claims, **characterized in that** the composition has one component.

8. Composition according to any one of Claims 1 to 6, **characterized in that** the composition has two components and consists of a component **K1** and a component **K2.**

9. Composition according to Claim 8, **characterized in that** the polyisocyanate **P** having aromatic isocyanate groups and the dialdimine **A** of the formula (I) is part of component **K1,** and component **K2** comprises compounds reactive toward isocyanate groups, especially water and/or polyols and/or polyamines.

10. Composition according to Claim 8, **characterized in that** the polyisocyanate **P** having aromatic isocyanate groups is part of component **K1** and component **K2** comprises the dialdimine **A** of the formula (I) and compounds reactive toward isocyanate groups, especially water and/or polyols and/or polyamines.

11. Cured composition which is obtained by the reaction of a composition according to any one of Claims 1 to 7 with water, especially in the form of air humidity.

12. Cured composition which is obtained by the mixing of the two components **K1** and **K2** of a composition according to any one of Claims 8 to 10, if appropriate followed by a reaction with water.

13. Use of a composition according to any one of Claims 1 to 10 as an adhesive, sealant, potting composition or coating.

14. Use of a composition according to any one of Claims 1 to 10 for sealing joints, especially joints of a built structure in construction or civil engineering.

15. Process for adhesive bonding of a substrate **S1** to a substrate **S2,** comprising the steps of
i) applying a composition according to any one of Claims 1 to 10 to a substrate **S1;**
ii) contacting the composition applied with a substrate **S2** within the open time of the composition;
or
i') applying a composition according to any one of Claims 1 to 10 to a substrate **S1** and to a substrate **S2;**
ii') contacting the compositions applied with one another within the open time of the composition;
said substrate **S2** consisting of the same material as, or a different material than, the substrate **S1.**

16. Process for sealing, comprising the step of
i") applying a composition according to any one of Claims 1 to 10 between a substrate **S1** and a substrate **S2,** such that the composition is in contact with the substrate **S1** and the substrate **S2;**
said substrate **S2** consisting of the same material as, or a different material than, the substrate **S1.**

17. Process for coating a substrate **S1,** comprising the step of
i''') applying a composition according to any one of Claims 1 to 10 to a substrate **S1** within the open time of the composition.

18. Article which has been adhesive bonded, sealed or coated by a process according to any one of Claims 15 to 17.

## Revendications

1. Composition, comprenant
a) au moins un polyisocyanate P présentant des groupes isocyanate aromatiques, et
b) au moins une dialdimine A de formule (I), 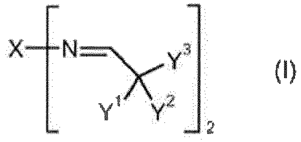
X représentant le radical d'une diamine DA comportant deux groupes amino primaires, après la suppression de ces deux groupes amino ; et
Y¹ et Y² soit
représentant indépendamment l'un de l'autre à chaque fois un radical hydrocarboné monovalent comportant 1 à 12 atome(s) de carbone,
soit représentant ensemble un radical hydrocarboné divalent comportant 4 à 20 atomes de carbone, qui fait partie d'un cycle carbocyclique éventuellement substitué comportant 5 à 8, préférablement 6 atomes de carbone ; et
Y³ représentant un radical hydrocarboné monovalent, qui présente éventuellement au moins un hétéroatome, en particulier oxygène sous forme de groupes éther, carbonyle ou esters ;
étant entendu qu'au moins un des deux groupes amino primaires de la diamine DA est un groupe amino aliphatique, et les deux groupes amino primaires de la diamine DA
soit
se différencient l'un de l'autre d'au moins une unité, dans le nombre d'atomes d'hydrogène sur les atomes de carbone situés en position α (C_{α}) par rapport à chaque groupe amino,
soit
se différencient l'un de l'autre d'au moins deux unités, dans le nombre d'atomes d'hydrogène sur les atomes de carbone situés en position β (Cp) par rapport à chaque groupe amino.

2. Composition selon la revendication 1, **caractérisée en ce que** la diamine DA est choisie dans le groupe constitué par la 1,2-propanediamine, la 2-méthyl-1,2-propanediamine, la 1,3-butanediamine, le 1,3-diaminopentane (DAMP), la 4-aminoéthylaniline, la 4-aminométhylaniline, la 4-[(4-aminocyclohexyl)méthyl]aniline, la 2-aminoéthylaniline, la 2-aminométhylaniline, la 2-[(4-aminocyclohexyl)méthyl]aniline, la 4-[(2-aminocyclohexyl)méthyl]aniline ; la 2,2,4-triméthylhexaméthylènediamine (TMD), le 1,5-diamino-2-butyl-2-éthylpentane, le 1-amino-3-aminométhyl-3,5,5-triméthylcyclohexane (= isophoronediamine = IPDA) et le 1,4-diamino-2,2,6-triméthylcyclohexane (TMCDA).

3. Composition selon la revendication 1 ou 2, **caractérisée en ce que** le polyisocyanate P présentant des groupes isocyanate aromatiques est un polymère de polyuréthane PUP présentant des groupes isocyanate aromatiques, en particulier pouvant être obtenu par la transformation d'au moins un polyol avec au moins un polyisocyanate aromatique.

4. Composition selon la revendication 3, **caractérisée en ce que** le polyisocyanate utilisé pour la préparation du polymère de polyuréthane PUP présentant des groupes isocyanate aromatiques est un polyisocyanate aromatique, qui est choisi dans le groupe constitué par le diisocyanate de 2,4-toluylène et le diisocyanate de 2,6-toluylène et de quelconques mélanges de ces isomères (TDI), le diisocyanate de 4,4'-diphénylméthane, le diisocyanate de 2,4'-diphénylméthane et le diisocyanate de 2,2'-diphénylméthane et de quelconques mélanges de ces isomères (MDI), des mélanges de MDI et d'homologues de MDI (MDI polymérique ou PMDI), le diisocyanate de 1,3-phénylène et le diisocyanate de 1,4-phénylène, le 2,3,5,6-tétraméthyl-1,4-diisocyanatobenzène, le 1,5-diisocyanatonaphtalène (NDI), le 3,3'-diméthyl-4,4'-diisocyanatodiphényle (TODI), le diisocyanate de dianisidine (DADI), les oligomères et les polymères des isocyanates mentionnés précédemment, ainsi que de quelconques mélanges des isocyanates mentionnés précédemment.

5. Composition selon la revendication 1 ou 2, **caractérisée en ce que** le polyisocyanate P présentant des groupes isocyanate aromatiques est un polyisocyanate aromatique PI, qui est choisi dans le groupe constitué par le diisocyanate de 2,4-toluylène et le diisocyanate de 2,6-toluylène et de quelconques mélanges de ces isomères (TDI), le diisocyanate de 4,4'-diphénylméthane, le diisocyanate de 2,4'-diphénylméthane et le diisocyanate de 2,2'-diphénylméthane et de quelconques mélanges de ces isomères (MDI), des mélanges de MDI et d'homologues de MDI (MDI polymérique ou PMDI), le diisocyanate de 1,3-phénylène et le diisocyanate de 1,4-phénylène, le 2,3,5,6-tétraméthyl-1,4-diisocyanatobenzène, le 1,5-diisocyanatonaphtalène (NDI), le 3,3'-diméthyl-4,4'-diisocyanatodiphényle (TODI), le diisocyanate de dianisidine (DADI), les oligomères et les polymères des isocyanates mentionnés précédemment, ainsi que de quelconques mélanges des isocyanates mentionnés précédemment.

6. Composition selon l'une quelconque des revendications précédentes, **caractérisée en ce que** Y³ représente un radical de formule (II) ou (III), préférablement représente un radical de formule (III), 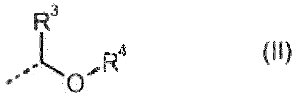 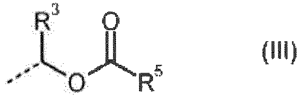
R³ représentant un atome d'hydrogène ou un groupe alkyle ou arylalkyle, comportant en particulier 1 à 12 atome(s) de carbone, préférablement un atome d'hydrogène ;
R⁴ représentant un radical hydrocarboné comportant 1 à 30, en particulier 11 à 30 atome(s) de carbone, qui contient éventuellement des hétéroatomes ; et
R⁵ représentant
soit un atome d'hydrogène,
soit un radical alkyle linéaire ou ramifié comportant 1 à 30, en particulier 11 à 30, atome(s) de carbone, éventuellement comportant des parties cycliques et éventuellement comportant au moins un hétéroatome,
soit un radical hydrocarboné insaturé une ou plusieurs fois, linéaire ou ramifié, comportant 5 à 30 atomes de carbone,
soit un cycle à 5 ou 6 chaînons éventuellement substitué, aromatique ou hétéroaromatique.

7. Composition selon l'une quelconque des revendications précédentes, **caractérisée en ce que** la composition est à un seul composant.

8. Composition selon l'une quelconque des revendications 1 à 6, **caractérisée en ce que** la composition est à deux composants et est constituée d'un composant K1 et d'un composant K2.

9. Composition selon la revendication 8, **caractérisée en ce que** le polyisocyanate P présentant des groupes isocyanate aromatiques et la dialdimine A de formule (I) font partie du composant K1 et le composant K2 contient des composés réactifs vis-à-vis de groupes isocyanate, en particulier de l'eau et/ou des polyols et/ou des polyamines.

10. Composition selon la revendication 8, **caractérisée en ce que** le polyisocyanate P présentant des groupes isocyanate aromatiques fait partie du composant K1 et le composant K2 contient la dialdimine A de formule (I), ainsi que des composés réactifs vis-à-vis de groupes isocyanate, en particulier de l'eau et/ou des polyols et/ou des polyamines.

11. Composition durcie, qui est obtenue par la réaction d'une composition selon l'une quelconque des revendications 1 à 7 avec de l'eau, en particulier sous forme d'humidité de l'air.

12. Composition durcie, qui est obtenue par le mélange des deux composants K1 et K2 d'une composition selon l'une quelconque des revendications 8 à 10, suivi éventuellement par une réaction avec de l'eau.

13. Utilisation d'une composition selon l'une quelconque des revendications 1 à 10 en tant qu'adhésif, matière d'étanchéité, masse de scellement ou revêtement.

14. Utilisation d'une composition selon l'une quelconque des revendications 1 à 10 pour l'étanchéification de jointures, en particulier de jointures d'un ouvrage du bâtiment ou du génie civil.

15. Procédé pour l'adhésion d'un substrat S1 avec un substrat S2, comprenant les étapes
i) application d'une composition selon l'une quelconque des revendications 1 à 10 sur un substrat S1 ;
ii) mise en contact de la composition appliquée avec un substrat S2 pendant le temps ouvert de la composition ;
ou
i') application d'une composition selon l'une quelconque des revendications 1 à 10 sur un substrat S1 et sur un substrat S2 ;
ii') mise en contact de la composition appliquée l'une avec l'autre ;
le substrat S2 étant constitué du même matériau que le substrat S1 ou d'un matériau différent.

16. Procédé pour l'étanchéification, comprenant l'étape
i") application d'une composition selon l'une quelconque des revendications 1 à 10 entre un substrat S1 et un substrat S2, de sorte que la composition est en contact avec le substrat S1 et le substrat S2 ;
le substrat S2 étant constitué du même matériau que le substrat S1 ou d'un matériau différent.

17. Procédé pour le revêtement d'un substrat S1, comprenant l'étape
i''') application d'une composition selon l'une quelconque des revendications 1 à 10 sur un substrat S1 pendant le temps ouvert de la composition.

18. Article, qui a été collé, étanchéifié ou revêtu par un procédé selon l'une quelconque des revendications 15 à 17.
